# EUROPÄISCHE PATENTSCHRIFT

(11) **EP 0 822 562 B1**
(45) Veröffentlichungstag und Bekanntmachung des Hinweises auf die Patenterteilung: **15.01.2003**
(21) Anmeldenummer: 97112169.4
(22) Anmeldetag: 16.07.1997
(51) Int. Cl.: H01B 13/10

(54) **Verfahren sowie Vorrichtung zum Längsaufbringen von mindestens einer Folie auf ein Kabelprodukt**
Process and device for longitudinal lapping of at least one foil on a cable product
Procédé et dispositif pour enrouler longitudinalement au moins un film sur un produit de câble

(30) Priorität: 01.08.1996 DE 19631118; 01.08.1996 DE 19631119
(43) Veröffentlichungstag der Anmeldung: 04.02.1998
(73) Patentinhaber: SIEMENS AKTIENGESELLSCHAFT, 80333 München (DE)
(72) Erfinder: Luthardt, Reiner, Dipl. Ing., 96465 Neustadt (DE); Höllein, Mario, 96269 Grossheirath (DE); Knopf, Erich, Dipl. Ing., 96450 Coburg (DE); Reissenweber, Wilfried, 96472 Rödental (DE)
(74) Vertreter: Epping, Wilhelm, Dipl.-Ing.

(56) Entgegenhaltungen:
- DE-B- 1 164 529
- US-A- 4 252 584

## Beschreibung

Die Erfindung betrifft ein Verfahren zum Längsaufbringen mindestens einer Folie auf mindestens ein in Längsrichtung durchlaufendes, langgestrecktes Kabelprodukt.

Zur Erzielung bestimmter Eigenschaften eines langgestreckten Kabelprodukts, wie z.B. zur elektromagnetischen Abschirmung der Kabelseele eines elektrischen Nachrichtenkabels, sind sehr häufig ein oder mehrere Folien in verschiedensten Anordnungen um dieses Kabelprodukt aufgebracht. Das einwandfreie Aufbringen derartiger Folien kann in der Praxis schwierig sein.

In US 4 252 584 A ist ein Verfahren und eine Vorrichtung zum Aufbringen einer separat geführten Umwickelung, insbesondere einer Aluminium- oder Kunststoffolie, um eine Kabelseele eines Nachrichtenkabels beschrieben. Dabei wird die Kabelseele von einer derartigen Folie umwickelt und dieser Verband anschließend mit einem weiteren Umwickelungsmaterial in einer entsprechenden Vorrichtung eingewickelt und die Folie mit der Kabelseele in Kontakt gebracht.

In DE 1 164 529 B ist ein Verfahren und eine Vorrichtung zur Längsaufbringung eines Isolierstoffbandes um eine Kabelseele beschrieben. Das um die Kabelseele geformte Isolierstoffband wird durch eine Schweißvorrichtung mit achsparallel zum Kern und durchgehend verlaufender Naht verschweißt. Danach wird mit einer Strangspritzmaschine ein Mantel aufgebracht.

Der Erfindung liegt die Aufgabe zugrunde, einen Weg aufzuzeigen, wie in einfacher Weise mindestens eine Folie auf ein langgestrecktes Kabelprodukt zuverlässig aufgebracht werden kann, und wie dabei in einfacher Weise gewährleistet werden kann, daß die Folie mit einer vorgebbaren Geometrieform wirksam lagegesichert wird. Diese Aufgabe wird bei einem Verfahren der eingangs genannten Art gemäß Patentanspruch 1 gelöst.

Dadurch, daß die jeweilige Folie separat, d.h. unabhängig, vom Kabelprodukt geführt und dabei um dieses rohrförmig herumgeformt wird, kann das gebildete Folien- Längsrohr unter weitgehender Beibehaltung seiner vorgegebenen Querschnittsform in präzise kontrollierbarer Weise auf das Kabelprodukt längsaufgebracht werden.

Die Erfindung betrifft auch eine Vorrichtung zum Längsaufbringen mindestens einer Folie auf mindestens ein in Längsrichtung durchlaufendes Kabelprodukt gemäß Patentanspruch 10.

Die Erfindung betrifft weiterhin ein Verfahren zum Längsaufbringen mindestens einer Folie auf ein in Längsrichtung durchlaufendes Kabelprodukt gemäß Patentanspruch 12, bei dem die Folie zu einem Folien- Längsrohr um das Kabelprodukt herumgeformt und auf dieses mit längsverlaufenden Bandkanten aufgebracht wird, und welches dadurch gekennzeichnet ist, daß die beiden Bandkanten des Folien- Längsrohres lediglich mit Hilfe von im Längsabstand aufeinanderfolgenden Fixierungen aneinander geheftet werden, während sie zwischen diesen Fixierungen unverbunden bleiben.

Die Erfindung betrifft auch ein Nachrichtenkabel mit mindestens einem langgestreckten Kabelprodukt gemäß Patentanspruch 16, auf das mindestens eine Folie aufgebracht ist, bei dem die Folie zu einem Längsrohr mit längsverlaufenden Bandkanten um das Kabelprodukt herumgeformt ist, und welches dadurch gekennzeichnet ist, daß die Bandkanten der Folie lediglich mit Hilfe von im Längsabstand aufeinanderfolgenden Fixierungen aneinander geheftet sind, während sie zwischen diesen Fixierungen unverbunden bleiben.

Weiterhin bezieht sich die Erfindung auch auf eine Vorrichtung zum Aufbringen mindestens einer Folie auf ein in Abzugsrichtung durchlaufendes Kabelprodukt gemäß Patentanspruch 17, bei der Umformmittel vorgesehen sind, mit denen die Folie zu einem Längsrohr mit längsverlaufenden Bandkanten um das Kabelprodukt herumformbar ist, und welche dadurch gekennzeichnet ist, daß Fixiermittel nachgeordnet sind, mit denen die Bandkanten der Folie lediglich an mit Längsabstand aufeinanderfolgenden Fixierungen aneinander heftbar sind, während sie zwischen den Fixierungen unverbunden bleiben.

Sonstige Weiterbildungen der Erfindung sind in den Unteransprüchen wiedergegeben.

Die Erfindung und ihre Weiterbildungen werden nachfolgend anhand von Zeichnungen näher erläutert:

Es zeigen:
- Figur 1: in schematischer Längsschnittdarstellung eine Vorrichtung zur Durchführung eines erfindungsgemäßen Verfahrens,
- Figuren 2 mit 8: jeweils schematisch im Querschnitt verschiedene Umformmittel der Vorrichtung nach Figur 1,
- Figur 9: schematisch im Längsschnitt den Spritzkopf des ausgangsseitigen Extruders der Vorrichtung nach Figur 1 bzw. 2,
- Figuren 10 mit 15: jeweils schematisch im Querschnitt unterschiedliche Kabelprodukte, die mit mindestens einer Folie nach einem erfindungsgemäßen Verfahren rohrförmig umschlossen sind,
- Figur 16: in schematischer Draufsichtsdarstellung eine Vorrichtung zur Herstellung eines Nachrichtenkabels, bei dem um dessen Kabelseele mindestens ein Folienlängsrohr nach dem erfindungsgemäßen Verfahren aufgebracht und fixiert wird,
- Figur 17: schematisch in perspektivischer Darstellung das Nachrichtenkabel nach Figur 16 schichtenweise entmantelt,
- Figur 18: schematisch in perspektivischer Darstellung eine Abwandlung des Nachrichtenkabels nach Figur 17 mit einer modifizierten Folienfixierung,
- Figur 19: schematisch im Querschnitt eine weitere Abwandlung des Nachrichtenkabels nach Figur 17 mit einer weiteren, modifizierten Folienfixierung, und
- Figur 20: schematisch im Detail eine weitere, modifizierte Art der mechanischen Fixierung der Bandkanten eines Folienrohres bei dem Nachrichtenkabel nach Figur 17.

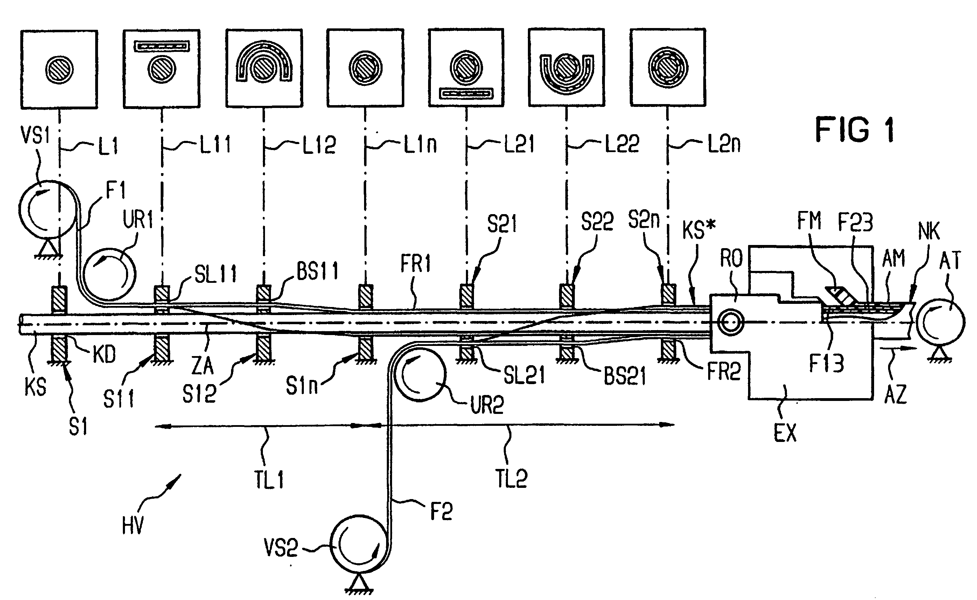

Elemente mit gleicher Funktion und Wirkungsweise sind in den Figuren 1 mit 20 jeweils mit den gleichen Bezugszeichen versehen.

Figur 1 zeigt in schematischer Längsschnittdarstellung den ausgangsseitigen Teilabschnitt einer Herstellungslinie HV für ein Nachrichtenkabel NK. Dessen Kabelseele KS wird in der Figur 1 von links nach rechts im wesentlichen geradlinig in Abzugsrichtung AZ abgezogen. Die Kabelseele KS ist dabei lediglich schematisch in Form eines langgestreckten, schmalen Rechtecks angedeutet. Sie ist vorzugsweise durch mehrere, miteinander verseilte elektrische Adern oder Aderpaare gebildet. Die für die Fertigung der Kabelseele KS erforderlichen Vorrichtungen, insbesondere Verseilvorrichtungen sind in der Figur 1 der Übersichtlichkeit halber weggelassen worden. Auf die Kabelseele KS werden in der Figur 1 beispielhaft zwei Folien F1, F2 in Form von Folien-Längsrohren FR1, FR2 mittels längsortsfest angebrachter Führungs- bzw. Umformmittel wie z.B. S11 mit S1n, S21 mit S2n aufgebracht. Die so zweischichtig umhüllte Kabelseele KS* wird schließlich im Extruderspritzkopf eines nachgeordneten Extruders EX mit mindestens einem ein- oder mehrschichtigen Kabelaußenmantel AM umgeben. Das fertige Nachrichtenkabel NK wird dann auf eine Vorratstrommel AT aufgewickelt. Die Herstellung des Nachrichtenkabels NK wird also bevorzugt in einem einzigen, kontinuierlich durchlaufenden Fertigungsprozeß bzw. Arbeitsgang durchgeführt.

In der Figur 1 sind als Umformmittel für die erste Folie F1 feststehende Formscheiben bzw. Umformnippel F11 mit F1n sowie für die zweite Folie F2 Formscheiben bzw. Umformnippel F21 mit F2n vorgesehen. Diese Umformelemente, d.h. im einzelnen die Formscheiben S11 mit S1n für die Folie F1 sowie die Formscheiben S21 mit S2n für die Folie F2, sind in der Figur 1 in Abzugsrichtung AZ entlang einer gedachten Geradenlinie in definierten Längsabständen hintereinander angeordnet. Dabei bilden in Abzugsrichtung AZ betrachtet die Formscheiben S11 mit S1n eine der ersten Folie F1 zugeordnete Umformstrecke TL1. An diesen ersten Teillängenabschnitt bzw. an diese Umfomstrecke TL1 schließt sich in Abzugsrichtung AZ betrachtet eine der zweiten Folie F2 zugeordnete, separate Umformstrecke TL2 an, die durch die Formscheiben S21 mit S2n gebildet ist.

Die Formscheiben S11 mit S1n, S21 mit S2n sind vorzugsweise plattenförmig, insbesondere als rechteckförmige Platte, ausgebildet. Für sie ist zweckmäßigerweise ein reibungsarmer sowie verschleißarmer Werkstoff gewählt. Sie weisen jeweils eine zentrale Durchgangsöffnung KD zum separaten Hindurchführen bzw. Hindurchziehen der Kabelseele KS auf. Insbesondere umgeben die Formscheiben die durchlaufende Kabelseele KS bezüglich deren Zentralachse ZA jeweils im wesentlichen konzentrisch.

Zur Führung und Umformung der beiden Folien F1, F2 sind in die Formscheiben zusätzlich eigenständige, separate Durchgangsöffnungen vorgebbaren Querschnitts eingelassen. Zur besseren Veranschaulichung des Umformvorganges der beiden Folien F1 bzw. F2 mit Hilfe der Formscheiben S11 mit S1n bzw. S21 mit S2n sind deren zugehörige Querschnitte in der oberen Bildhälfte von Figur 1 zusätzlich miteingezeichnet. Die Zuordnung dieser Querschnittsabbildungen zu den Längsschnittabbildungen der Formscheiben S11 mit S1n sowie S21 mit S2n in der unteren Bildhälfte von Figur 1 ist dabei mit Hilfe strichpunktierter Linien L11 mit L1n sowie L21 mit L2n veranschaulicht.

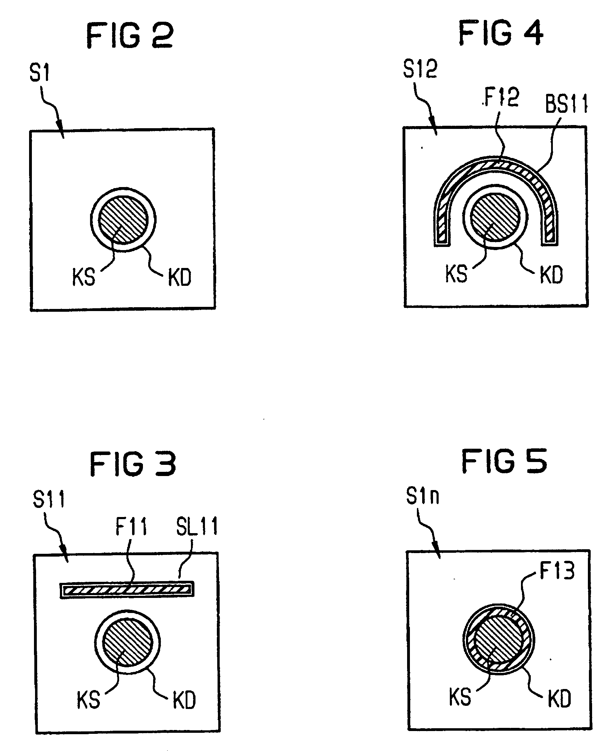

Die Kabelseele KS ist (räumlich betrachtet) vorzugsweise in Form eines annäherungsweise kreiszylinderförmigen Stranges ausgebildet. Die jeweilige, zentrale Durchgangsöffnung in den Formscheiben S11 mit S1n sowie S21 mit S2n weist bezüglich ihrer Innenkontur vorzugsweise einen an die Außenkontur der Kabelseele angepaßten, hier insbesondere etwa kreisrunden Querschnitt auf. Bei den Figuren 3 mit 8, die jeweils die Querschnitte der Formscheiben S11 mit S1n, S21 mit S2n von Figur 1 bei Blickrichtung in Abzugsrichtung AZ vergrößert im Detail zeigen, ist die zentrale Durchgangsöffnung mit KD bezeichnet. Die jeweilige, zentrale Durchgangsöffnung KD in den Formscheiben S11 mit S1n sowie S21 mit S2n von Figur 1 sorgt insbesondere dafür, daß die Kabelseele KS an den mit definierten Längsabständen aufeinanderfolgenden Längsorten der Formscheiben S11 mit S1n sowie S21 mit S2n eine weitgehend definierte, stabile Wegführung bekommt. Seitliche Auslenkungen, d.h. radiale Schwankungen der durchlaufenden Kabelseele KS bezogen auf die gedachte, geradlinige Verlängerung der vorgegebenen Abzugsrichtung AZ sind dadurch weitgehend vermieden. Die Formscheiben tragen also insbesondere mit dazu bei, daß die Kabelseele weitgehend geradlinig dem Extruder EX zugeführt wird.

In der linken Bildhälfte von Figur 1 wird die Kabelseele KS zunächst einer ersten, eingangsseitigen Führungsscheibe S1 zugeführt, die lediglich die zentrale, etwa kreisrunde Durchgangsöffnung KD (vergleiche deren Querschnittsbild in Figur 2) zur queraxialen Führung der Kabelseele KS aufweist. Ihr Innendurchmesser ist zweckmäßigerweise etwa gleich dem Außendurchmesser der Kabelseele gewählt.

In der Figur 1 wird die Folie F1 von ihrer vorzugsweise feststehenden Vorratsspule VS1 abgezogen und über Umlenkmittel UR1, insbesondere eine Umlenkrolle, in eine Bahn gebracht, die annäherungsweise parallel zur geradlinigen Längserstrekkung der Kabelseele KS verläuft. Entlang diesem Laufweg wird die Folie F1 in einem definierten, radialem Abstand zur Außenoberfläche der durchlaufenden Kabelseele KS gehalten, d.h. sie kommt mit der Kabelseele KS noch nicht in Kontakt. Die Folie F1 ist dabei im wesentlichen plan ausgelegt. Entlang dieser geradlinigen Bahn wird sie einer eigens zugeordneten, separaten Durchgangsöffnung SL11 in der zweiten Formscheibe S12 zugeführt und dort hindurchgezogen. Diese Durchgangsöffnung SL11 für die Folie F1 zeigt die Figur 3 schematisch im Querschnitt. Sie weist vorzugsweise eine etwa flach rechteckförmige Innenkontur auf, d.h sie bildet einen flach rechteckförmigen Schlitz. Ihre Durchgangshöhe entspricht vorzugsweise annähernd der Banddicke der Folie F1. Ihre Durchgangsbreite ist zweckmäßigerweise etwa gleich der Bandbreite der Folie F1 gewählt. Dadurch wird die Folie F1 beim Hindurchziehen plan bzw. eben ausgelegt und ihr damit eine definierte Ausgangsform - hier als schmal rechteckförmiges Band- zugewiesen. In diesem Zustand ist die Folie in der Figur 3 mit F11 bezeichnet. Im Querschnittsbild von Figur 3 ist der Schlitz SL11 oberhalb der zentralen Durchgangsöffnung KD, d.h. mit Querabstand zu dieser, in die Formscheibe S11 eingelassen. Seine Breitseite verläuft im Querschnittsbild von Figur 3 betrachtet im wesentlichen parallel sowie mit Abstand zu derjenigen Tangente am Außenumfang des kreisrunden Durchgangs KD, die dort der 12° Uhr- Position zugeordnet ist.

Um die Folie beispielsweise zu einem Folienröhrchen mit Stoß an Stoß gesetzten Bandkanten um die Kabelseele KS herumformen zu können, weist die Folie F1 vorzugsweise eine Bandbreite auf, die etwa dem Außenumfang der ringsum zu umhüllenden Kabelseele entspricht. Besonders zweckmäßig ist es, die Bandbreite der jeweiligen Folie etwas größer als den Außenumfang der zu umhüllenden Kabelseele KS zu wählen, so daß ein Folien- Längsröhrchen mit sich überlappenden Bandkanten und damit eine rundum geschlossene, d.h. in Umfangs- sowie in Längsrichtung weitgehend dichte Umhüllung gebildet werden kann. Zur Führung der Kabelseele ist der Innendurchmesser der zentralen Durchgangsöffnung KD zweckmäßigerweise etwa gleich dem Außendurchmesser der Kabelseele gewählt.

Um die Folie F1 rohrförmig um die Kabelseele KS herumzuformen, weist die nächste, in Längsrichtung folgende Formscheibe S12 eine halbkreisförmig gebogene Durchgangsöffnung BS11 auf (vergleiche Figur 1 zusammen mit Figur 4). Deren Durchgangshöhe entspricht vorzugsweise etwa der Banddicke, ihre Krümmungslänge etwa der Bandbreite der Folie F1. Beim Hindurchziehen durch diesen bogenförmigen Schlitz BS11 wird die Folie F1 in einem ersten Schritt annäherungsweise zu einer halbkreiszylinderförmigen Schale bzw. Hülle umgeformt. Diese teilumgeformte Folie ist im Querschnittsbild von Figur 4 mit F12 bezeichnet. Der bogenförmige Schlitz BS11 umgibt dabei in der Figur 4 mit definiertem, radialem Abstand (bezogen auf die Zentralachse ZA der durchlaufenden Kabelseele) die obere Teilhälfte der kreisrunden Durchgangsöffnung KD. Er stellt somit eine separate Führung für die Folie F1 bereit. Allgemein ausgedrückt ist es zweckmäßig, die Innenkontur der Foliendurchgangsöffnung BS11 an die jeweilig zu bedeckende Außenkontur der Kabelseele anzupassen. Auf ihrem Laufweg von der Formscheibe S11 zur Formscheibe S12 kommt dabei die Folie F1 immer noch nicht mit der durchlaufenden Kabelseele KS in Kontakt, sondern wird ohne Berührung der Kabelseele KS eigenständig in Abzugsrichtung AZ entlanggeführt und dabei im wesentlichen halbschalenförmig, insbesondere zu einem annäherungsweise halbkreiszylinderförmigen Foliengebilde umgeformt. Zur Führung der Kabelseele ist auch bei dieser Formscheibe der Innendurchmesser der zentralen Durchgangsöffnung KD zweckmäßigerweise etwa gleich dem Außendurchmesser der Kabelseele gewählt.

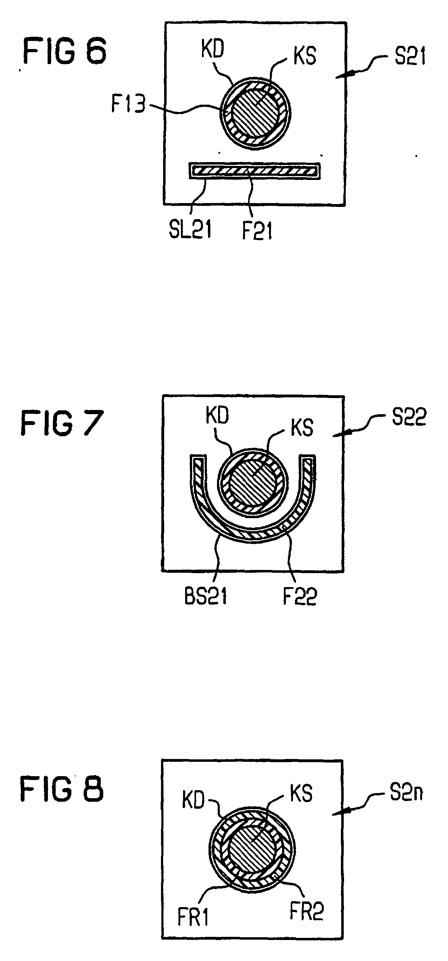

Die halbkreisförmig umgeformte Folie F12 (vergleiche Figur 4) wird anschließend in der Figur 1 der zentralen Durchgangsöffnung KD der nachfolgenden Formscheibe S1n zugeführt. Dadurch legt sich die Folie F1 rohrförmig, insbesondere kreiszylinderförmig, um die Kabelseele KS herum und kontaktiert erst ab hier, d.h. nach und/oder bei Vollendung ihrer gewünschten Geometrieform die Außenoberfläche bzw. Mantelfläche der Kabelseele. Dieser Zustand der rohrförmig umgeformten Folie ist in der Figur 5 mit F13 bezeichnet. Der Innendurchmesser der zentralen Durchgangsöffnung KD ist dabei vorzugsweise etwas größer als der Außendurchmesser der Kabelseele KS gewählt, um Platz für das nachträgliche Aufbringen der fertig geformten Folie F1 auf die Kabelseele KS zu haben. Vorzugsweise wird der Innendurchmesser der zentralen Durchgangsöffnung KD zwischen 1,01 und 2,0 mal, insbesondere zwischen 1,01 und 1,05 mal größer als der Außendurchmesser der Kabelseele KS gewählt. Auf diese Weise wird die Kabelseele KS noch vor dem Einlauf in den Extruder EX mit einer ersten, rohrförmigen Umhüllung durch die umgeformte Folie F1 versehen, die auf der Außenoberfläche der Kabelseele aufsitzt. Die Folie F1 kann zuvor insbesondere zu einem etwa kreiszylinderförmigen Längsrohr mit sich überlappenden Bandkanten umgeformt worden sein. Genauso kann es zweckmäßig sein, die Folie mit Hilfe der Formscheiben zu einem Längsrohr mit Stoß an Stoß gesetzten Bandkanten oder zu einem Längsschlitzrohr mit auf Abstand gesetzten Bandkanten umzuformen.

Zusammenfassend betrachtet wird für den Umformvorgang der jeweiligen Folie zweckmäßigerweise eine Vielzahl von Umformelementen entlang der geradlinigen Längserstreckung der Kabelseele KS in definierten Längsabständen aufeinanderfolgend angeordnet. Um die jeweilige, ursprünglich plane Folie rohrförmig um die Kabelseele KS herumzuformen, weisen diese mehreren Umformelemente jeweils eine eigens zugeordnete, getrennte Führungsöffnung, d.h. einen separaten Durchgang, für die jeweilig umzuformende Folie auf. Die jeweilige Folie wird also während ihres Umformvorgangs räumlich getrennt von der Kabelseele geführt. Dabei ist es besonders zweckmäßig, im jeweiligen Umformelement zugleich auch eine separate Durchgangsöffnung für die zu bedeckende Kabelseele vorzusehen. Durch diese einstückige Ausführung der jeweiligen Formscheibe kann eine definierte räumliche Zuordnung von Folien- und Kabelseelenlaufweg in besonders einfacher Weise sichergestellt werden. Die Profilierungen, d.h. Querschnittsgeometrien, der Durchgangsöffnungen für die Folie in den Umformelementen sind zweckmäßigerweise derart gewählt, daß die Folie sukzessive, insbesondere kontinuierlich in die gewünschte Geometrieform umgeformt werden kann. Zum Längsaufbringen mindestens einer Folie wie z.B. F1 auf mindestens ein in Längsrichtung durchlaufendes, langgestrecktes Kabelprodukt (wie z.B. die Kabelseele KS) wird die Folie entlang einer zugeordneten Umformstrecke wie z.B. TL1 separat vom durchlaufenden Kabelprodukt entlanggeführt und dabei rings um das Kabelprodukt zu einem Folien- Längsrohr wie z.B. FR1 herumgeformt. Erst dann, d.h. nach Abschluß der Folienformung, wird das so gebildete, d.h. fertig geformte Folien- Längsrohr FR1 in Kontakt mit dem durchlaufenden Kabelprodukt KS gebracht.

Dadurch, daß die jeweilige Folie wie z.B. F1 an mehreren Längsorten der durchlaufenden Kabelseele KS mit Hilfe von Umformelementen wie z.B. S11 mit S1n räumlich getrennt von, d.h. ohne Kontakt zur Außenoberfläche, der Kabelseele KS geführt und um diese herumgeformt wird, kann die Folie zu einer Außenhülle vorgebbarer Geometrieform umgeformt und unter weitgehender Beibehaltung dieser Geometrieform besonders sicher auf die Kabelseele KS aufgebracht werden. Insbesondere ist es ermöglicht, durch entsprechende Querschnittsgeometrien, d.h. Profilierung der Folien- Durchgangsöffnungen in den Formscheiben unabhängig von der Querschnittsgeometrie der Kabelseele eine vorgebbare Endform der Folie zu erhalten. Denn die Formgebung für die Folie F1 erfolgt unabhängig von der Führung der Kabelseele KS.

Die Führungs- bzw. Umformmittel wie z.B. S11 mit S1n sind vorzugsweise entlang der Teilstrecke bzw. dem Teillängenabschnitt TL1 bei vorgebbaren, in Abständen aufeinanderfolgenden Längsorten in einer geradlinigen Reihe hintereinander angeordnet. Die Teilstrecke TL1 erstreckt sich vorzugsweise zwischen 10 und 2000 mm, insbesondere zwischen 100 und 600 mm. Jeweils zwei benachbarte Führungsmittel sind vorzugsweise im Abstand zwischen 10 und 1000 mm, insbesondere zwischen 50 und 300 mm positioniert.

Entlang der (in Figur 1 in Abzugsrichtung AZ betrachtet) der Umformstrecke TL1 nachfolgenden, zweiten Umformstrecke TL2 wird die zweite Folie F2 mit Hilfe einer weiteren Reihe von Formscheiben S21 mit S2n in analoger Weise zur ersten Folie F1 rohrförmig um die Kabelseele KS herumgeformt und auf diese als Folien- Längsrohr mit vorgebbarer Querschnittsform aufgebracht. Dazu wird die ursprünglich plane Folie F2 in Figur 1 von ihrer Vorratsspule VS2 abgezogen und über Umlenkmittel UR2, insbesondere eine Umlenkrolle, in eine zur Längserstreckung der Kabelseele KS vorzugsweise etwa parallel verlaufende Bahn gebracht. Die Folie F2 wird durch einen etwa rechteckförmigen Schlitz SL21 im Führungselement S21 hindurchgezogen (vgl. Figur 6), der entsprechend dem Schlitz SL11 von Figur 3 ausgebildet ist. Der Schlitz SL21 ist jetzt der unteren Teilhälfte des Außenumfangs der zentralen Durchgangsöffnung KD zugeordnet, insbesondere um etwa 180° am Außenumfang der Durchgangsöffnung KD versetzt, und somit auf der entgegengesetzten Seite der Durchgangsöffnung KD wie der Schlitz SL11 für die erste Folie F1 angeordnet. Sie weist dabei einen definierten, radialen Abstand zur zentralen Durchgangsöffnung KD auf. Zur Führung der Kabelseele und zur Sicherung der Lage sowie Querschnittsgeometrieform des auf ihr aufgebrachten Folien- Längsrohres ist bei dieser Formscheibe S21 der Innendurchmesser der zentralen Durchgangsöffnung KD zweckmäßigerweise etwa gleich dem Außendurchmesser der mit der ersten Folie F1 bedeckten Kabelseele gewählt. Mit Hilfe des rechteckförmigen Schlitzes SL21 wird der Folie F2 eine definierte, plane Lage zugeordnet, die in der Figur 6 mit F21 bezeichnet ist.

Ausgehend von diesem ursprünglich planen, unverformten Zustand F21 der zweiten Folie F2 wird diese mit Hilfe der nachgeordneten Führungsscheibe S22 dadurch in eine Halbkreisform gebracht, daß die Folie F2 durch einen Schlitz BS21 mit halbkreisförmiger Innenkontur hindurchgezogen wird. Diese Durchgangsöffnung BS21 ist in der Figur 7 im Querschnitt gezeichnet. Sie umschließt die zentrale Durchgangsöffnung KD halbkreisförmig von unten her, d.h. sie ist gegenüber dem bogenförmigen Schlitz BS11 der ersten Folie F1 um etwa 180° in Umfangsrichtung versetzt. In der Figur 7 umgibt der Schlitz BS2 die zentrale Durchgangsöffnung KD somit annäherungsweise in Form eines Hufeisens und weist zu ihr einen vorgebbaren radialen Abstand auf. Der halbkreisförmig profilierte Schlitz BS2 ist dabei im wesentlichen konzentrisch zur Zentralachse ZA der zentralen Durchgangsöffnung KD angeordnet. Die Bandbreite der Folie F2 ist vorzugsweise etwa dem Außendurchmesser der zu bedeckenden Kabelseele KS gewählt, um aus ihr ein annäherungsweise kreiszylinderförmiges Folien-Längsrohr rings um die Kabelseele formen zu können. Zur Führung der Kabelseele und zur Sicherung der Lage sowie Querschnittsgeometrieform des auf ihr aufgebrachten Folien- Längsrohres ist bei dieser Formscheibe S21 der Innendurchmesser der zentralen Durchgangsöffnung KD zweckmäßigerweise etwa gleich dem Außendurchmesser der mit der ersten Folie F1 bedeckten Kabelseele gewählt.

Um schließlich zu erreichen, daß die Folie F2 zu einem in Umfangsrichtung weitgehend geschlossenen Folien- Längsrohr FR2 rings um die Kabelseele KS herumgeformt wird, wird die zweite Folie F2 ausgehend von der bogenförmigen, insbesondere halbtorusförmigen Durchgangsöffnung BS21 schräg nach innen zur zentralen Durchgangsbohrung KD des nachgeordneten Umformelements, insbesondere der Formscheibe S2n geführt. Erst dort legt sich die Folie F2 - als bereits fertig geformtes Längsrohr- als zweite Bedeckungslage ringsum die mit der ersten, rohrförmigen Folie F1 bedeckten Kabelseele, d.h. erst dort kommt das zweite Folienrohr FR2 mit der durchlaufenden Kabelseele in Kontakt. Für die zentrale Durchgangsöffnung KD der Formscheibe S2n ist vorzugsweise ein Innendurchmesser gewählt, der etwa dem um die doppelte Schichtdicke der beiden aufzubringenden Folienlagen vergrößerten Außendurchmesser der Kabelseele entspricht. Dadurch läßt sich die Lage sowie Querschnittsform der fertig geformten, zweiten Folie sofort nach ihrem Aufsitzen auf der ersten Folienlage sichern.

Während die zweite Folie F2 zu dem Folienröhrchen FR2 entlang der Umformstrecke TL2 um die Kabelseele KS herumgeformt wird, wird mit Hilfe der Umformelemente F21 mit F2n dafür gesorgt, daß das erste Folienröhrchen FR1 seine vorgegebene Querschnittsform beibehält und nicht aufgeht. Denn die mit dem ersten Folienröhrchen FR1 bedeckte Kabelseele KS wird in der zentralen Durchgangsöffnung KD der Formscheiben F21 mit F2n jeweils radial von außen abgestützt und dadurch in Umfangsrichtung, inbesondere queraxial lagegesichert.

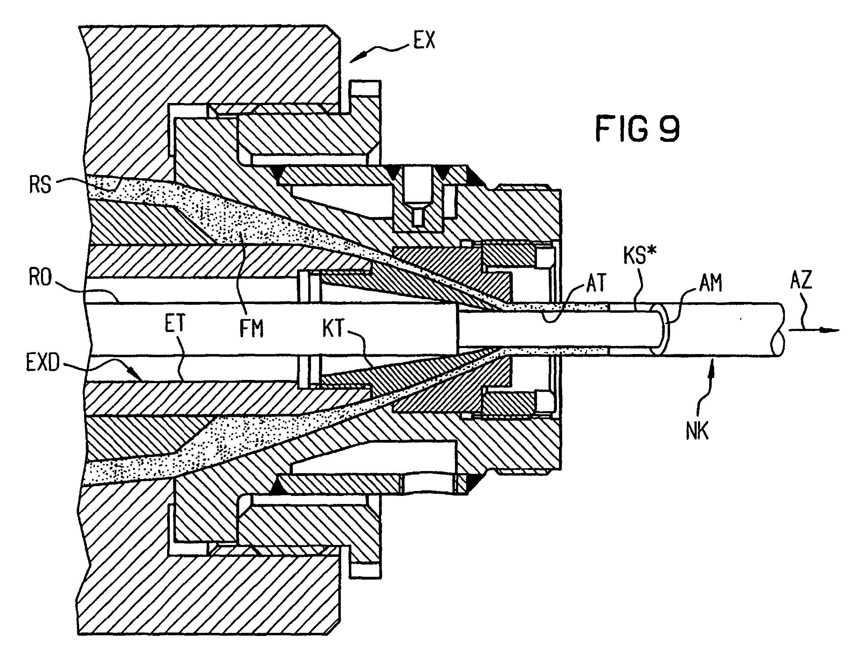

Die Kabelseele KS läßt sich somit von einer zweifachen, rohrförmigen Folienanordnung definierter Querschnittsform umgeben. In der Figur 1 ist die derart bedeckte Kabelseele mit KS* bezeichnet. Figur 8 stellt schematisch im Querschnitt die Lageverhältnisse für die mit den zwei Folien F1, F2 jeweils rohrförmig bedeckte Kabelseele KS dar. In diesem Endzustand sind die rohrförmig umgeformten Folien F1, F2 mit FR1 sowie FR2 bezeichnet.

Auf diese Weise ist sowohl die erste als auch die zweite Folie F1, F2 jeweils rohrförmig umgeformt und auf die Kabelseele KS längsaufgebracht. Diese rohrförmigen Folienumhüllungen weisen jeweils vorzugsweise einen sich in Längsrichtung AZ im wesentlichen geradlinig durchlaufenden Überlappungsbereich ihrer Bandkanten auf. Gegebenenfalls kann es auch zweckmäßig sein, die Bandkanten der jeweiligen Folie lediglich aneinanderstoßen zu lassen oder eine rohrförmige Umhüllung mit im wesentlichen geradlinig verlaufenden Längsschlitz zu bilden. Vorzugsweise ist dabei der Überlappungsbereich bzw. der Längsschlitz des zweiten, äußeren Folienröhrchens FR2 um etwa 180° am Außenumfang gegenüber dem Überlappungsbereich bzw. Längsschlitz des ersten, inneren Folienröhrchens FR1 versetzt, so daß der Überlappungsbereich bzw. Längsschlitz des ersten Folienröhrchens FR1 von dem zweiten Folienröhrchen FR2 außen abgedeckt wird.

In der Figur 1 werden die Folien F1, F2 räumlich getrennt voneinander entlang zweier aufeinanderfolgender Umformstrekken TL1, TL2 zu Folien- Längsrohren FR1, FR2 umgeformt und zeitlich nacheinander auf das Kabelprodukt längsaufgebracht. Anstelle dessen kann es gegebenenfalls auch zweckmäßig sein, die Folien wie z.B. F1, F2 entlang etwa derselben Umformstrecke wie z.B. TL1 räumlich getrennt voneinander schichtenweise übereinander zu Folien- Längsrohren FR1, FR2 um das Kabelprodukt herumzuformen. Diese ineinander geschachtelten Folien- Längsrohre wie z.B. FR1, FR2 werden dann etwa beim selben Längsort gleichzeitig auf das Kabelprodukt längsaufgebracht. Vorzugsweise liegen die Folien- Längsrohre dabei koaxial zueinander.

In der Figur 1 wird die mit den zwei Folienlagen umgebene Kabelseele KS* beim Einlauf in den Spritzkopf des Extruders EX zusätzlich in einem langgestreckten Stützrohr RO entlanggeführt. Dieses Stützrohr RO weist vorzugsweise eine Innenquerschnittsform auf, die der gewünschten Querschnittsform der folienbedeckten Kabelseele KS* entspricht, d.h. das Innenprofil des Stützrohres RO ist zweckmäßigerweise an das Außenprofil des jeweiligen, folienbedeckten Kabelprodukts angepaßt. Hier im Ausführungsbeispiel ist es vorzugsweise kreiszylinderförmig ausgebildet. Sein Innendurchmesser ist hierbei vorzugsweise derart gewählt, daß die Kabelseele KS* bezogen auf ihre Zentralachse ZA radial von außen abgestützt wird. Dadurch kann die zweilagig bedeckte Kabelseele KS* im wesentlichen stabil in den Extruder EX eingeführt werden, ohne daß es zu unzulässigen Veränderungen ihrer Querschnittsform kommt. Das zusätzliche Stütz- bzw. Führungsrohr RO sorgt also für eine stabile Führung der Kabelseele KS* mit den rohrförmig aufgebrachten Folien. Es erstreckt sich vorzugsweise zumindest soweit in den Extruderspritzkopf hinein und stützt dabei das mit einer oder mehreren Folien umgebene Kabelprodukt solange radial von außen ab, bis der Außenmantel AM aufextrudiert und dadurch eine dauerhafte Lagefixierung der Folien bewirkt wird. Zweckmäßig kann es insbesondere sein, daß Stützrohr RO vom Ausgang der letzten Formscheibe S2n bis in den Extruderspritzkopf hinein reichen zu lassen. Zusätzlich oder unabhängig hiervon ist es zweckmäßig, der letzten Formscheibe S2n den Extruder EX unmittelbar nachzuordnen, um die dazwischenliegende Laufstrecke möglichst klein zu halten. Durch das Stützrohr ist somit weitgehend vermieden, daß die Folien- Längsrohre FR1, FR2 vor dem Aufbringen des Außenmantels AM aufgehen, ihre Querschnittsformen in unzulässiger Weise verändert oder gar zerstört werden. Das zusätzliche Führungs- bzw. Stützrohr RO bewirkt also, daß die Geometrieform des jeweiligen Folien- Längsrohres um die Kabelseele beibehalten wird. Insbesondere kann es derart profiliert ausgebildet sein, daß die folienumhüllte Kabelseele KS* am seinem Rohrende in radialer Richtung "nachverdichtet", d.h. endgeformt wird. Auf diese endgeformte, folienbedeckte Kabelseele KS* wird unmittelbar der Kunststoffmantel AM zur Lagefixierung der Folien-Längsrohre aufextrudiert.

Figur 9 zeigt schematisch sowie vergrößert im Längsschnitt den Extruderspritzkopf des Extruders EX von Figur 1. Dieser Extruderspritzkopf weist zum Hindurchführen der folienbedeckten Kabelseele KS* von Figur 1 eine zentrale Durchgangsöffnung EXD auf, die sich in Abzugsrichtung AZ im wesentlichen geradlinig erstreckt. Die Durchgangsöffnung EXD ist zunächst entlang einem eingangsseitigen Teilstück ET im wesentlichen kreiszylinderförmig ausgebildet. Daran schließt sich ein Mittelteil KT an, dessen Durchgang sich in Abzugsrichtung AZ konisch verjüngt und schließlich entlang einem ausgangsseitigen Teilabschnitt AT in einen etwa kreiszylinderförmigen Durchgang übergeht. Dessen Innendurchmesser ist vorzugsweise etwa gleich dem gewünschten Außendurchmesser des zu fertigenden Nachrichtenkabels NK gewählt. In diesen ausgangsseitigen Durchgang mündet schräg von außen kommend ein Ringspaltkanal RS ein, der heiße, zähflüssige Kunststoffmasse FM dem Extruderdurchgang EXD zuführt, insbesondere zupumpt. Der Ringspaltkanal RS umgibt dabei insbesondere konzentrisch die durchlaufende Kabelseele KS*. Die durchlaufende, mit Folien F1, F2 bedeckte Kabelseele KS* wird auf diese Weise ringsum mit der Kunststoffmasse FM beschichtet und der Außenmantel AM gebildet.

Um die Folien- Längsröhrchen FR1, FR2 insbesondere zumindest bis zum Aufbringen des Außenmantels AM in Umfangsrichtung betrachtet zusammenhalten zu können, erstreckt sich das Stützrohr RO (, d.h. allgemein ausgedrückt Führungs- bzw. Abstützelemente,) annäherungsweise bis zu demjenigen Längsort, wo der Ringspaltkanal RS in den zentralen Durchgang EXD einmündet. Es wirkt dabei als seitliches, insbesondere queraxiales Abstützmittel, das die folienbedeckte Kabelseele KS* insbesondere rundum, d.h. um deren gesamten Außenumfang einschließt. Es übt also für das jeweilige Folienröhrchen eine Führungs- sowie Lagefixierungsfunktion aus. Weiterhin kann es gegebenenfalls bereits ausreichend sein, daß Stützrohr lediglich im Eingangsbereich des Extruderspritzkopfes wie z.B. lediglich im Teilstück ET anzubringen, insbesondere nur soweit, bis sich die zentrale Durchgangsöffnung EXD genügend verengt hat. Allgemein ausgedrückt erstreckt sich das Stützrohr RO also zweckmäßigerweise soweit in den Extruderspritzkopf hinein, daß die "Schließform", d.h. vorgegebene Geometrieform des jeweiligen Folien-Längsrohres FR1, FR2 vor dem Extruder EX bis zum Aufbringen des Kunststoffmantels AM beibehalten werden kann.

Der Innendurchmesser des Stützrohres RO wird vorzugsweise zwischen 0 und 1 mm, insbesondere zwischen 0 und 0,58 mm größer als der Außendurchmesser der folienbedeckten Kabelseele KS gewählt. Das Stützrohr RO weist vorzugsweise eine Längserstreckung zwischen 100 mm und 1 m auf.

In der Figur 1 sind der zeichnerischen Einfachheit halber pro Folie lediglich 3 feststehende Formscheiben entlang deren Umformweg bis zum Aufbringen auf die Kabelseele vorgesehen. In der Praxis werden je nach Bedarf zweckmäßigerweise zwischen 3 und 15, insbesondere zwischen 3 und 8 Umformelemente entlang dem Laufweg der jeweiligen Folie angeordnet. Bei mehreren Umformelementen pro Folienlaufweg weisen deren Durchgangsöffnungen vorzugsweise jeweils eine solche Innenkontur form auf, die jeweils annäherungsweise einem Teilabschnitt der zu fertigenden Folienröhrchen- Außenkontur entspricht. Insbesondere nähert sich die Innenkonturform der Folien- Durchgangsöffnung von einer Formscheibe zur nächsten Formscheibe schrittweise an die gewünschte Folien- Endform an.

Die Figuren 1 mit 8 beziehen sich zwar lediglich auf zwei Folien, die im selben Arbeitsgang jeweils rohrförmig in zwei Bedeckungskagen auf die selbe Kabelseele aufgebracht werden. Dieses erfindungsgemäße Prinzip läßt sich jedoch auf beliebig viele, vorzugsweise mindestens zwei Folienlagen erweitern.

Dann sind zweckmäßigerweise soviele unterschiedliche Umformstrecken analog TL1, TL2 von Figur 1 wie aufzubringende Folien- Längsrohre vorgesehen.

Pro Folie ist also zweckmäßigerweise jeweils eine separate Umformstrecke vorgesehen, entlang der sie räumlich getrennt vom zu bedeckenden, durchlaufenden Kabelprodukt sowie weiteren Bedeckungselementen geführt wird. Entlang dieser zugeordneten, vorgebbaren Umformstrecke sind dabei ein oder mehrere Umformmittel angeordnet, die die jeweilige Folie sukzessive, insbesondere kontinuierlich um die Kabelseele mit einer bestimmten, vorgebbaren Querschnittsgeometrieform herumformen und diese dabei, d.h. während dem eigentlichen Umformvorgang selbst, solange auf Abstand von der Kabelseele halten, bis der Umformvorgang abgeschlossen ist. Erst dann wird das fertig umgeformte Folienröhrchen auf die Kabelseele aufgesetzt und mit deren Außenoberfläche in Kontakt gebracht.

Zusammenfassend betrachtet ist es mit Hilfe der Umformmittel in vorteilhafter Weise ermöglicht, ein oder mehrere Folien im Längseinlauf direkt vor dem Extruder sauber sowie geometrisch exakt, d.h. besonders wirkungsvoll auf das jeweilig zu bedekkende Kabelprodukt, hier die Kabelseele KS, aufzubringen. Denn die Folien werden zunächst unabhängig, d.h. ohne Berührung bzw. Kontaktierung des durchlaufenden Kabelprodukts vorgeformt und dann erst nach Beendigung der Rohrformung auf das Kabelprodukt aufgesetzt. Durch diese Art der Folienröhrchen-Fertigung ist es besonders einfach ermöglicht, in einem einzigen Arbeitsgang mehrere Folien auf die Kabelseele KS aufzubringen. Während im gleichen Führungs- bzw. Umformelement das jeweilige Kabelprodukt mit einem etwaig bereits aufgebrachten Folienröhrchen sicher geführt wird, kann gleichzeitig die nächste Folie separat vorgeformt und dadurch eine stabile Führung und Vorformung dieser neu aufzubringenden Folie erreicht werden. Weiterhin erlaubt dieses Prinzip insbesondere extrem hohe Abzugsgeschwindigkeiten bei der Kabelherstellung. Vorzugsweise kann z.B. das Nachrichtenkabel NK mit Geschwindigkeiten zwischen 50 und 500 m/min, insbesondere zwischen 50 und 200 m/min in Längsrichtungg AZ abgezogen werden. Denn durch die besondere Profilierung der Durchgangsöffnungen der feststehenden Umformelemente für das folienzubedeckende Kabelprodukt sowie die jeweilig aufzubringende Folie kann die jeweilige Folie weitgehend reibungsarm abgezogen werden, so daß eine unzulässig hohe Folienbeanspruchung oder gar Folienabriß weitgehend vermieden wird. Weiterhin fehlen rotierende Teile um die Zentralachse ZA wie bei herkömmlichen Wendelwicklern oder Bandspinnern, so daß auf die jeweilige Folie keine unzulässig hohen Fliehkräfte einwirken können. Es ergibt sich somit eine Vorrichtung mit sehr einfachem mechanischem Aufbau, die lediglich die feststehenden Umformelemente, insbesondere Formscheiben, zum Längsaufbringen mindestens einer Folie auf ein durchlaufendes Kabelprodukt verwendet. Mit Hilfe der Umformelemente ist es weiterhin ermöglicht, daß die gebildeten Folienröhrchen in präzise kontrollierbarer Weise an einem vorgebbaren Längsort zusammengeführt werden. Insbesondere liegt dieser Längsort möglichst nahe beim Eingang des Extruders EX, um den Laufweg bis zum Aufbringen des Kabelaußenmantels AM möglichst kurz zu halten. Dadurch ist weitgehend vermieden, daß die gebildeten Folienröhrchen ihre gewünschte Geometrieform verlieren.

Nach dem erfindungsgemäßen Prinzip läßt sich nicht nur eine Kabelseele wie z.B. KS mit mindestens einer Folie umhüllen, sondern allgemein beliebige, langgestreckte Kabelprodukte. Dabei ist die Folienformung sogar unabhängig vom jeweiligen Querschnittsprofil des zu umhüllenden Kabelprodukts.

Ein solches langgestrecktes Kabelprodukt kann vorzugsweise durch mindestens ein elektrisches Übertragungselement wie z.B. eine einzelne elektrische Ader, ein elektrisches Aderpaar, mehrere elektrische Aderpaare, eine elektrische Bandleitung, eine elektrische Kabelseele oder dergleichen gebildet sein. Gegebenenfalls kann das Kabelprodukt auch durch mindestens ein optisches Übertragungselement wie z.B. einen Lichtwellenleiter, eine Lichtwellenleiter- Bündelader, ein Lichtwellenleiterbändchen, eine Lichtwellenleiter- Kammerkabelseele oder sonstige, optische Kabelseelen mit mindestens einem Lichtwellenleiter gebildet sein. Weiterhin kann es ggf. auch zweckmäßig sein, ein langgestrecktes Kabelprodukt mit mindestens einem elektrischen und mit mindestens einem optischen Übertragungselement gemischt aufzubauen. Genauso sind auch sonstige langgestreckten Güter der Kabeltechnik, wie z.B. Glasfaserbündel, nach dem erfindungsgemäßen Verfahren mit mindestens einer rohrförmigen Folie einhüllbar.

Unter dem Begriff "Folie" werden im Rahmen der Erfindung alle möglichen Arten von Bändern verstanden, die üblicherweise in der Kabeltechnik Verwendung finden, wie z.B. Kunststoffolien, verschäumte Kunststoffolien, Verbundfolien wie z.B. metallkaschierte Kunststoffolien, Metallfolien, Textilfolien oder - Bänder, Glimmerfolien, Papierfolien, Glasgewebebänder, usw. oder Kombinationen dieser Folien. Zur elektromagnetischen und/oder elektrostatischen Abschirmung einzelner elektrischer Adern, einzelner elektrischer Aderpaare oder ganzer elektrischer Kabelseelen, eignen sich insbesondere Metallfolien oder bevorzugt metallkaschierte Kunststoffolien.

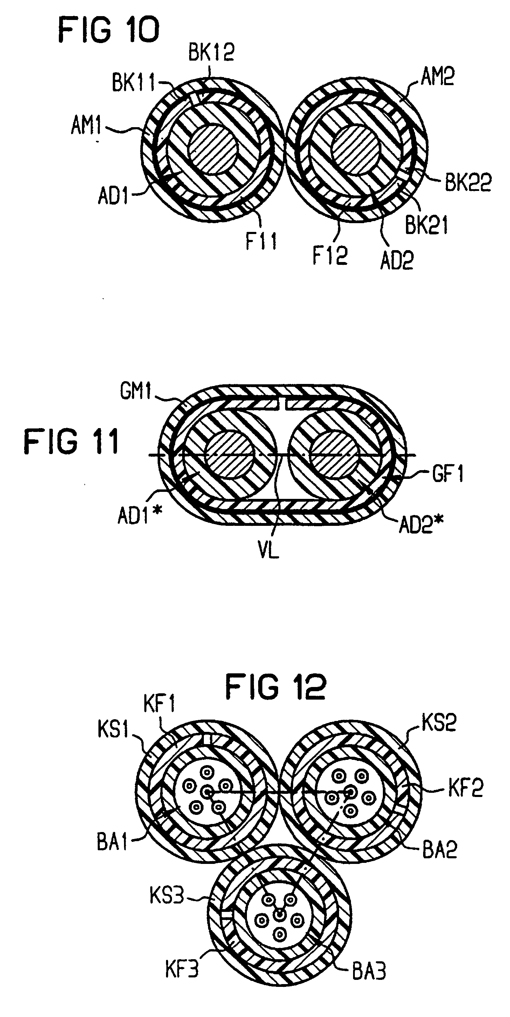

Die Figuren 10 mit 15 zeigen jeweils schematisch im Querschnitt verschiedene Arten von Kabelprodukten bzw. Kabelelementen mit unterschiedlichen Querschnittsprofilen, die jeweils mit mindestens einer Folie nach dem erfindungsgemäßen Verfahren rohrförmig umschlossen sind.

Figur 10 zeigt schematisch im Querschnitt zwei elektrische Adern AD1, AD2 etwa kreisrunden Querschnitts als langgestreckte Kabelelemente, die jeweils einzeln für sich mit einer Folie F11, F12 im wesentlichen kreisringförmig umgeben sind. Jede Ader AD1, AD2 ist durch einen etwa kreisrunden, metallischen Kern gebildet, der außen im wesentlichen koaxial von einer fest aufsitzenden Kunststoffisiolierung umgeben ist. Die jeweilige Folie F11, F12 umgibt dabei ihre Ader AD1, AD2 in Form eines Folien- Längsrohres mit Stoß an Stoß gesetzten Bandkanten BK11/BK12, BK21/BK22. Die jeweilige Folie F11, F12 ist am Außenmantel der zugehörigen Ader AD1, AD2 von außen durch einen fest aufsitzenden Kunststoffmantel bzw. eine Kunststoffbeschichtung AM1, AM2 lagegesichert, der im wesentlichen torusförmig ausgebildet ist. Zur elektromagnetischen Einzelabschirmung jeder Ader AD1, AD2 ist als Folie F11, F12 zweckmäßigerweise jeweils eine metallkaschierte Kunststoffolie, insbesondere eine Aluminium- oder Kupfer- kaschierte Kunststoffträgerfolie verwendet. Die jeweilige Folie F11, F12 ist mit ihrer Metallbeschichtung vorzugsweise nach außen gewendet, d.h. sie liegt jeweils mit ihrer Kunsstoffträgerfolie am Außenumfang der Kunststoffisolierung der zugehörigen, elektrischen Ader AD1, AD2 an, um eine zuverlässige elektrische Isolierung sicherstellen zu können. Der zeichnerischen Einfachheit halber ist dabei die Metallbeschichtung der Folien F11, F12 mit Hilfe einer dicker gezogenen Außenberandungslinie angedeutet.

Eine derartige, zweischichtige Einzeladerumhüllung- gebildet durch jeweils eine Folie und eine äußere Kunststoffbeschichtung - läßt sich nach dem erfindungsgemäßen Prinzip für die zwei elektrischen Adern AD1, AD2 beispielsweise mit Hilfe einer Vorrichtung herstellen, die zwei, im wesentlichen parallel nebeneinander liegende Ader-Abzugswege mit je einer zugeordneten Folienformstrecke (z.B. analog TL1 von Figur 1) entsprechend Figur 1 aufweist. Ausgangsseitig ist dabei für jede folienumhüllte Ader ein separater Extruder (z.B. analog EX von Figur 1) vorgesehen. Die Adern AD1, AD2 lassen sich also dadurch mit je einem Folien-Längsrohr individuell "umkleiden", indem die Herstellungslinie von Figur 1 dupliziert wird, d.h. allgemein ausgedrückt: Pro folienzubedeckendem Kabelelement wird zweckmäßigerweise eine eigene Führungsstrecke mit je einer zugeordneten Umformstrecke pro aufzubringender Folie bereitgestellt. Dadurch kann eine Vielzahl von Kabelelementen gleichzeitig mit mindestens einem Folien-Längsrohr individuell umhüllt oder bedeckt werden.

Die beiden, jeweils für sich zweischichtig umhüllten (Folie plus Extrusionsschicht) elektrischen Adern AD1, AD2 können insbesondere miteinander paarverseilt werden.

Zweckmäßig kann es weiterhin sein, die Adern AD1, AD2 mit ihren Kunststoffbeschichtungen AM1, AM2 unmittelbar bei oder nach der Extrusion zu kontaktieren. Dadurch verkleben die noch zähflüssigen Kunststoffmäntel AM1, AM2 miteinander, so daß eine mechanische Verbindung zwischen den beiden Adern hergestellt ist.

Zweckmäßig kann es gegebenenfalls auch sein, lediglich einen einzigen, gemeinsamen Extruder vorzusehen, in dessen Spritzkopf pro folienumhüllter Ader je ein separates Stützrohr (z.B. analog RO von Figur 1) eingangsseitig eingeführt ist. Mit einem solchen Extruder lassen sich die beiden, jeweils einzeln folienumhüllten Adern außen mit einer gemeinsamen Kunststoffhülle umgeben.

In der Figur 11 ist ein langgestrecktes Kabelelement durch ein elektrisches Aderpaar gebildet. Dessen zwei elektrische Adern AD1*, AD2* sind vorzugsweise entsprechend den Adern AD1, AD2 von Figur 10 ausgebildet. In der Figur 11 liegen ihre Zentren auf einer gedachten, strichpunktiert eingezeichneten Verbindungsgeraden VL. Sie erstrecken sich senkrecht zur Zeichenebene von Figur 11 im wesentlichen parallel nebeneinander. Rings um dieses Aderpaar sitzt ein gemeinsames Folienrohr GF1 auf, das eine annäherungsweise rechteckförmige Innen- sowie Außenkontur aufweist. Als Folie ist vorzugsweise eine elektromagnetische Abschirmfolie gewählt, deren Metallschicht in der Figur 11 außen liegt und mit einem dick gezogen Außenberandungsstrich angedeutet ist. Darüber ist zum Zusammenhalt und zur Lagefixierung der Folie GF1 ein gemeinsamer Kunststoffmantel GM1 aufextrudiert. Insgesamt ist somit ein im wesentlichen rechteckförmiges Bändchen mit zwei elektrischen Adern gebildet. Dieses Bändchen kann vorzugsweise mit einer zu Figur 1 abgewandelten Herstellungslinie HV gefertigt werden, die nur eine einzige Folienumformstrecke wie z.B. TL2 aufweist. Für das Aderpaar AD1*/AD2* ist dann in den Umformelementen wie z.B. S21 mit S2n der Folienumformstrecke TL2 von Figur 1 zweckmäßigerweise jeweils ein annäherungsweise rechteckförmiger Durchlaß anstelle der zentralen kreisrunden Durchgangsöffnung KD vorgesehen. Entlang der Umformstrecke TL2 wird die gemeinsame Folie GF1 räumlich getrennt von der Abzugsstrecke des Aderpaares AD1*/AD2* um dieses zu einem Längsrohr mit etwa rechteckförmiger Querschnittsform herumgeformt. Die Umformelemente S21 mit S2n weisen dazu eigens der Folie GF1 zugeordnete Durchlaßöffnungen auf, die jetzt derart profiliert sind, daß die Folie GF1 sukzessive zu einem Folien- Längsrohr mit annäherungsweise rechteckförmiger Geometrieform vorgeformt wird. Um die rechteckförmig vorgeformte Folie GF1 mit dieser Querschnittsform bis zum Aufbringen des Kunststoffmantels GM1 am Außenumfang des Aderpaares halten zu können, ist in den Extruderspritzkopf des Extruders EX von Figur 1 jetzt zweckmäßigerweise ein Stützrohr eingeführt, dessen Innenkontur an die gewünschte rechteckförmige Außenkontur des folienbedeckten Aderpaares AD1*/AD2* angepaßt ist. Dadurch lassen sich die beiden Bandenden der gemeinsamen Folie GF1 solange zusammenhalten, bis die Kunststoffschicht GM1 aufextrudiert ist.

Figur 12 zeigt als langgestreckte Kabelelemente drei Lichtwellenleiter- Bündeladern BA1 mit BA3, auf die jeweils einzeln für sich je eine Folie KF1 mit KF3, insbesondere eine Kunststoffolie z.B. zu Kennzeichnungs- und Identifizierungszwecken, rohrförmig aufgebracht ist. Über jedem Folienrohr sitzt zur Lagesicherung jeweils eine aufextrudierte Kunststoffhülle KS1 mit KS3. Die drei folienumhüllten Bündeladern BA1 mit BA3 sind dabei in den drei Ecken eines vorzugsweise gleichschenkligen Dreiecks angeordnet und zwar so, daß sich ihre Kunststoffhüllen KS1 mit KS3 kontaktieren. Vorzugsweise sind die Kunststoffhüllen KS1 mit KS3 an ihren Berührungsstellen stoffschlüssig miteinander verbunden, so daß die drei Bündeladern BA1 mit BA3 als dreiecksförmige Struktur mechanisch fest aneinanderhängen. Das Aufbringen der jeweiligen Folie sowie der Kunststoffhülle auf die jeweilige Bündelader kann dabei insbesondere in Erweiterung des zu Figur 10 angegebenen, erfindungsgemäßen Prinzips erfolgen.

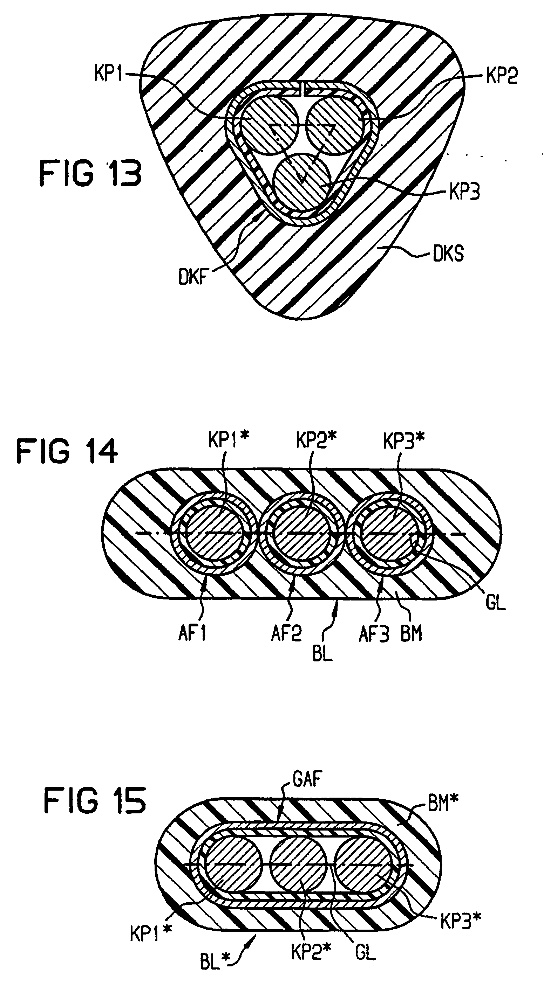

Figur 13 zeigt drei langgestreckte Kabelelemente bzw- produkte KP1 mit KP3, die jeweils symbolisch in Form eines schraffierten Kreises angedeutet sind. Sie sind in Dreiecksform angeordnet und von einer gemeinsamen Folie DKF straff in Form eines Folien- Längsrohres mit dreiecksförmiger Innenkontur sowie Außenkontur umspannt. Darüber ist zur Lagefixierung der Folienform eine gemeinsame Kunststoffschicht DKS mit etwa dreiecksförmiger Außenkontur DKS aufgebracht. Die Herstellung dieser Dreieckskonfiguration erfolgt vorzugsweise entsprechend der Herstellung des Bändchens nach Figur 11. Dazu werden jetzt die Durchgangsöffnungen der Umformelemente sowie des Stützrohres von Figur 1 an die gewünschte Geometrieform der Dreiecksgruppe von Kabelelementen KP1 mit KP3 angepaßt.

Figur 14 zeigt eine weitere Anordnung von drei langgestreckten Kabelelementen KP1* mit KP3*, um die jeweils individuell eine Folie AF1 mit AF3, hier insbesondere eine metallkaschierte Kunststoffolie, rohrförmig, insbesondere etwa kreiszylinderförmig, herumgelegt ist. Die Kabelelemente KP1* mit KP3* sind wiederum jeweils symbolisch in Form eines schraffierten Kreises angedeutet. Sie stehen bespielsweise stellvertretend für elektrische Adern analog Figur 1. Die folienbedeckten Kabelelemente sind entlang einer gedachten Verbindungsgeraden GL angeordnet. Dabei kontaktieren sie einander. Im Unterschied zu Figur 10, wo jedes folienumhüllte Kabelelement AD1, AD2 mit einer eigenen, kreisringförmigen Kunststoff- Ummantelung AM1, AM2 versehen ist, sind die drei folienumhüllten Kabelelemente KP1* mit KP3* von Figur 14 in eine gemeinsame Bandmaterialschicht BL eingebettet. Diese Bandmaterialschicht, insbesondere Kunststoffschicht weist eine im wesentlichen flach rechteckförmige Außenkontur auf und sitzt auch in den Zwickeln zwischen zwei benachbarten Kabelelementen. Auf diese Weise ist ein flach rechteckförmiges Bandelement BL gebildet. Das Aufbringen der Folie des jeweiligen Kabelelements KP1* mit KP3* kann vorzugsweise wie bei den einzelnen, elektrischen Adern von Figur 10 durchgeführt werden. Nach der individuellen Folienumhüllung werden die einzelnen, folienbedeckten Kabelelemente parallel nebeneinander sowie einander kontaktierend zusammengeführt und schließlich gemeinsam in einen Extruder zum Aufbringen des gemeinsamen Bändchenmantels BM eingeführt. Um zu vermeiden, daß die Folien AF1 mit AF3 bis zum Aufextrudieren des Bändchenmantels vom Außenumfang der Kabelelemente KP1* mit KP3* abgehen, werden sie zweckmäßigerweise zumindestes beim Einführen in den Extruder außen von einem Stützrohr geführt und abgestützt. Dieses Stützrohr weist in Abwandlung zu Figur 1 eine Innenkontur auf, die annäherungweise der Außenkontur oder insbesondere der Einhüllenden dieser Dreiergruppe von Kabelelementen KP1* mit KP3* entspricht. Insbesondere weist ein solches Stützrohr eine Durchgangsöffnung mit flach rechteckförmiger Querschnittsform auf. Besonders zweckmäßig ist ein Stützrohr, das sich vom letzten, ausgangsseitigen Umformelement bis in den Extruder hinein erstreckt.

Figur 15 zeigt die drei Kabelelemente KP1* mit KP3* von Figur 14 in einer weiteren Bändchenanordnung. Sie sind jetzt mit einem Zwischenabstand voneinander, d.h. nicht einander kontaktierend, entlang der gedachten Geradenlinie GL angeordnet. Rings um diese Gruppe von Kabelementen sitzt jetzt ein gemeinsames Folienröhrchen GAF mit flach rechteckförmiger Querschnittsform fest auf. Sie wird von einem gemeinsamen Bändchenmantel BM* von außen zusammengehalten, der eine etwa rechteckförmige Innen sowie Außenkontur aufweist. Die Herstellung einer solchen Kabelelementkonfiguration kann vorzugsweise in Erweiterung zu der des Zweier- Bändchens von Figur 11 erfolgen.

In der Praxis kann es gegebenenfalls recht schwierig sowie aufwendig sein, die jeweilige Folie mit einer vorgebbaren Geometrieform rings um das jeweilig zu bedeckende Kabelprodukt ausreichend in ihrer Lage zu sichern. Wünschenswert kann es deshalb insbesondere sein, einen weiteren Weg aufzuzeigen, wie mindestens eine Folie rings um ein langgestrecktes Kabelprodukt mit einer vorgebbaren Geometrieform in einfacher Weise wirksam lagegesichert werden kann. Diese Aufgabe wird dadurch gelöst, daß die Folie zu einem Folien- Längsrohr um das Kabelprodukt herumgeformt und auf dieses mit längsverlaufenden Bandkanten aufgebracht wird, und daß die beiden Bandkanten des Folien- Längsrohres lediglich mit Hilfe von im Längsabstand aufeinanderfolgenden Fixierungen aneinander geheftet werden, während sie zwischen diesen Fixierungen unverbunden bleiben.

Dadurch, daß die beiden Bandkanten der jeweiligen Folie lediglich mit Fixierungen zusammengehalten sind, die im Längsabstand aufeinander folgen, die Bandkanten der Folie jedoch zwischen den Fixierungen unfixiert bzw. unverbunden bleiben, wird bereits eine wirksame Lagesicherung der Folie über die Länge des Kabelprodukts hinweg bewirkt. Auf diese Weise behält die Folie ihre vorgegebene Geometrieform rings um das Kabelprodukt im wesentlichen bei.

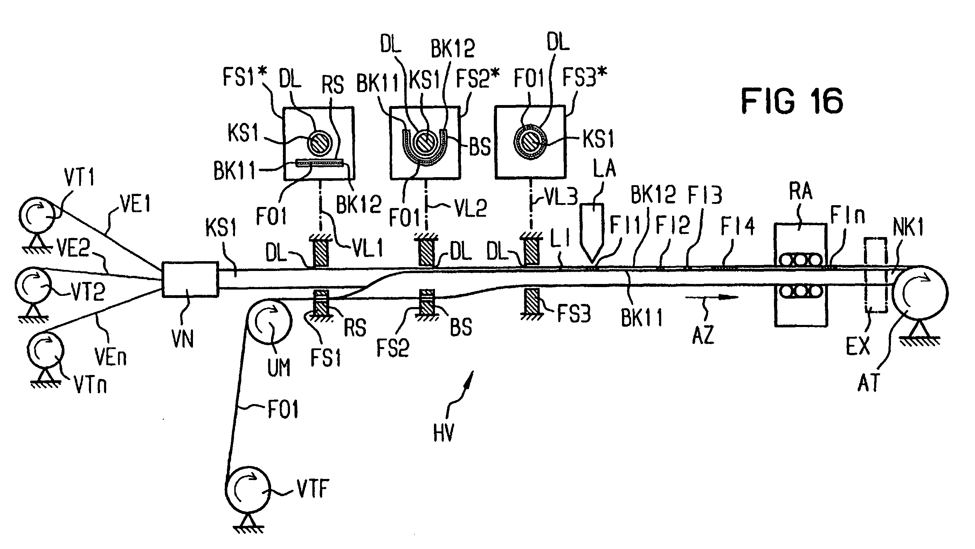

Figur 16 zeigt schematisch in Draufsicht eine Vorrichtung HV zur Herstellung eines erfindungsgemäßen Nachrichtenkabels NK1. Von Vorratsspulen VT1 mit VTn werden langgestreckte Verseilelemente VE1 mit VEn abgezogen und mit Hilfe einer Verseilvorrichtung VN miteinander zu einer Kabelseele KS1 verseilt. Als langgestreckte Verseilelemente VE1 mit VEn sind vorzugsweise elektrische Adern, elektrische Aderpaare, sowie sonstige elektrische Nachrichten- Übertragungselemente verwendet. Zusätzlich oder unabhängig hiervon können gegebenenfalls auch optische Übertragungselemente wie z.B. Lichtwellenleiter, Lichtwellenleiter- Bündeladern, Lichtwellenleiter- Bändchen, usw. zum Einsatz kommen. Als Verseilvorrichtung VN kann vorzugsweise eine Gleichschlag-Verseilmaschine oder SZ-Verseilmaschine vorgesehen sein. Die Kabelseele KS1 wird in der Figur 1 von links nach rechts im wesentlichen geradlinig in Abzugsrichtung AZ abgezogen. Sie ist dabei lediglich schematisch in Form eines langgestreckten Rechtecks angedeutet.

Auf die Kabelseele KS1 wird in der Figur 1 eine Folie FO1 mit Hilfe von Führungs- und Umformmitteln FS1 mit FS3 längsaufgebracht, die hinsichtlich Aufbau, Funktion und Wirkungsweise dem Konstruktionsprinzip der Umformelemente von Figur 1 entsprechen. Als Folie FO1 ist vorzugsweise eine elektromagnetische und/oder elektrostatische Abschirmfolie wie z.B. eine metallkaschierte Kunststoffolie verwendet. Zur elektromagnetischen und/oder elektrostatischen Abschirmung eignet sich insbesondere eine Kupfer- oder Aluminiumbeschichtete Kunststoffolie. Die Folie FO1 wird von ihrer feststehenden Vorratsspule VTF abgezogen und über Umlenkmittel UM, insbesondere eine Umlenkrolle oder dergleichen, in eine Bahn gebracht, die im wesentlichen parallel zur geradlinigen Längserstreckung der durchlaufenden Kabelseele KS1 verläuft. Die Umformmittel FS1 mit FS3 sind in der Figur 1 entlang einer gedachten Geradenlinie, das heißt entlang der Längserstreckung der Kabelseele KS1 mit definierten Abständen hintereinandergereiht. Diese Umformmittel sind vorzugsweise als Umformscheiben ausgebildet. Sie weisen jeweils eine zentrale Durchgangsöffnung DL zum separaten Hindurchführen der Kabelseele KS1 auf. Zur Führung und Formung der Folie FO1 ist in dem jeweiligen Umformelement zusätzlich eine eigenständige, separate Durchgangsöffnung vorgebbaren Querschnitts eingelassen. Zur besseren Veranschaulichung dieses Umformvorganges der Folie FO1 mit Hilfe der Umformelemente FS1 mit FS3 sind deren zugehörigen Querschnitte zusätzlich in der oberen Bildhälfte von Figur 1 zusätzlich mit eingezeichnet und mit den zugehörigen Bezugszeichen FS1* mit FS3* versehen. Die Zuordnung der Querschnittsabbildungen FS1* mit FS3* zu den Draufsichtsabbildungen der Umformelemente FS1 mit FS3 ist in der Figur 1 jeweils durch eine strichpunktierte Linie VL1 mit VL3 angedeutet.

Die Kabelseele KS1 ist räumlich betrachtet vorzugsweise in Form eines annäherungsweise kreiszylinderförmigen Stranges ausgebildet. Die zentrale Durchgangsöffnung in den Umformelementen FS1 mit FS3 weist deshalb vorzugsweise einen etwa kreisrunden Querschnitt auf. Der Innendurchmesser der zentralen Durchgangsöffnung BL ist vorzugsweise etwas größer als der Außendurchmesser der Kabelseele KS1 gewählt, um noch Platz zum späteren Aufbringen der Folie FO1 zu haben. Die zentrale Durchgangsöffnung DL in den Umformelementen FS1 mit FS3 übernimmt weiterhin die Funktion, daß die Kabelseele KS1 an den in Abständen aufeinanderfolgenden Längsorten eine definierte, stabile Wegführung erfährt. Seitliche Auslenkungen, das heißt radiale Schwankungen bezogen auf die Zentralachse der Kabelseele KS1 sind dadurch weitgehend vermieden, so daß die Kabelseele KS1 im wesentlichen geradlinig abgezogen wird. Die Folie FO1 wird zunächst einer eigens zugeordneten, separaten Durchgangsöffnung RS im ersten Umformelement FS1 zugeführt und durch diese hindurchgezogen. Diese Durchgangsöffnung RS ist als rechtecksförmiger Schlitz ausgebildet, so daß die Folie FO1 plan bzw. eben ausgelegt durch sie hindurchgeführt werden kann. Die Höhe dieses Schlitzes entspricht dabei vorzugsweise etwa der Banddicke der Folie FO1. Die Breite des Schlitzes ist insbesondere etwa gleich der Bandbreite der Folie FO1 gewählt. Die rechtecksförmige Durchgangsöffnung RS ist in der Figur 1 (vergleiche Querschnittsabbildung FS1*) unterhalb der zentralen Durchgangsöffnung KD in das Umformelement FS1 eingelassen. Die längere Seite der rechteckförmigen Durchgangsöffnung RS verläuft im Querschnitt betrachtet im wesentlichen tangential sowie mit Abstand zur kreisrunden Durchgangsöffnung KD. Um die Kabelseele KS mit der Folie FO1 rings um ihren Außenumfang bedecken zu können, weist die Folie FO1 vorzugsweise eine Bandbreite auf, die etwa dem Außenumfang der zu bedeckenden Kabelseele KS1 entspricht.

Um die Folie FO1 rohrförmig um die Kabelseele KS1 herumzuformen, weist das nächste in Längsrichtung folgende Führungselement FS2 eine halbkreisförmig gebogene Durchgangsöffnung BS auf. Dieser bogenförmige Schlitz BS umgibt dabei in der Figur 1 die untere Teilhälfte der kreisrunden Durchgangsöffnung KD. Beim Durchziehen durch diesen bogenförmigen Schlitz BS wird die Folie FO1 in einem ersten Schritt annäherungsweise zu einem Halbkreisbogen umgeformt. Der bogenförmige Schlitz BS stellt somit eine separate Führung für die Folie FO1 bereit. Die halbkreisbogenförmig umgeformte Folie (vergleiche Querschnittsabbildung FS2* in der Figur 1) wird anschließend in der Figur 1 der zentralen Durchgangsöffnung KD des nachfolgenden Führungselements FS3 zugeführt. Dadurch legt sich die Folie FO1 rohrförmig um die Kabelseele KS1 herum und kontaktiert erst hier beim dritten Führungselement FS3 die Außenoberfläche der Kabelseele KS1. Auf dem Laufweg der Folie FO1 von ihrer Vorratsspule VTF bis zum letzten Führungselement FS3 in der Reihe von Umformmitteln kommt die Folie FO1 somit mit der durchlaufenden Kabelseele KS1 noch nicht in Kontakt, sondern wird ohne Berührung der Kabelseele KS1 eigenständig in Abzugsrichtung entlanggeführt und dabei kontinuierlich umgeformt. Erst bei oder nach dem letzten Führungs- bzw. Umformelement FS3 setzt das gebildete Folien- Längsröhrchen auf die Kabelseele KS1 auf.

In der Figur 1 wird die Folie FO1 insbesondere zu einem annäherungsweise kreiszylinderförmigen Längsschlitzrohr rings um die durchlaufende Kabelseele KS1 herumgeformt und auf diese längsaufgebracht. Es stehen sich somit die beiden Bandkanten BK11, BK12 der Folie FO1 stirnseitig mit einem verbleibenden Längsspalt bzw. Längsschlitz LI gegenüber. Die Bandkanten BK11, BK12 verlaufen dabei in Längsrichtung der Kabelseele KS1, d.h. hier insbesondere etwa geradlinig. Somit erstreckt sich auch der Längsschlitz LI zwischen ihnen im wesentlichen parallel zur Zentralachse der Kabelseele KS1, d.h. im wesentlichen geradlinig. Um diese vorgegebene, rohrförmige Folien- Geometrie der Folie FO1 möglichst dauerhaft beibehalten zu können, werden die beiden Bandkanten BK11, BK12 der Folie FO1 mit Hilfe einer nachfolgenden Fixiervorrichtung LA miteinander fixiert. Dazu werden die längsverlaufenden Bandkanten BK11, BK12 lediglich an mit Längsabstand aufeinanderfolgende Fixierungen FI1 mit FIn aneinandergeheftet, d.h. miteinander fixiert, während sie (in Längsrichtung AZ betrachtet) zwischen den Fixierungen FI1 mit FIn unverbunden bleiben. Zwischen jeweils zwei benachbarten Fixierungen wie zum Beispiel FI1, FI2 sind die beiden Bandkanten der Folie FO1 somit nicht mechanisch miteinander verbunden, so daß dort der Längsschlitz LI offen verbleibt. Die Fixierungen können vorzugsweise durch Verkleben, Schmelzschweißen oder Laserschweißen bewirkt werden. Dazu ist als Fixiervorrichtung LA vorzugsweise eine Klebepistole, Schmelzschweißeinrichtung oder ein Laserschweißgerät vorgesehen. Der zeichnerischen Einfachheit halber sind in der Figur 1 die Fixierungen FI1 mit FIn jeweils lediglich durch dick gezeichnete Striche schematisch angedeutet.

Um zu erreichen, daß die Folie FO1 als Längsrohr möglichst ortslagefest in Umfangsrichtung auf der Kabelseele KS1 aufsitzt, wird die Folie FO1 insbesondere weitgehend straff um den Außenumfang der Kabelseele KS1 gespannt und ihre Bandkanten BK11, BK12 in Umfangsrichtung, d.h. queraxial bezogen auf die Längserstreckung der Kabelseele, lediglich an den mit Zwischenlücken aufeinanderfolgenden Fixierungen FI1 mit FIn mechanisch miteinander verbunden. Durch das straffe Aufsitzen der Folie FO1 läßt sich insbesondere weitgehend vermeiden, daß sich die Folie FO1 in Umfangsrichtung verdreht oder in sonstiger, unzulässiger Weise verrutscht.

Die Fixierungen FI1 mit FIn können vorzugsweise in regelmäßigen Längsabständen voneinander zur Fixierung der Bandkanten BK11, BK12 der Folie FO1 in Umfangsrichtung vorgesehen sein. Genauso kann es zweckmäßig sein, die Fixierungen FI1 mit FIn unregelmäßig in Längsrichtung verteilt vorzusehen. Durch die Fixierungen FI1 mit FIn wird eine Lagesicherung der Folien-Bandseiten in Umfangsrichtung, d.h. queraxial, bewirkt, so daß insgesamt über die Länge der Kabelseele KS1 hinweg gesehen die Längsrohrform der Folie FO1 dauerhaft erhalten bleibt, d.h. die Kabelseele KS1 bleibt von der Folie FO1 im wesentlichen dauerhaft bedeckt. Bei Verwendung einer elektromagnetischen Abschirmfolie ist somit eine zuverlässige elektromagnetische Abschirmung bereitgestellt. Für den bloßen Zusammenhalt der vorgegebenen Längsrohrform der Folie FO1 ist es also nicht erforderlich, eine über die gesamte Länge der Kabelseele KS gesehen durchlaufende, das heißt vollständig bzw. kontinuierlich durchgehende Längsnaht vorzusehen. Es genügt zum Zusammenhalt des Folien- Längsrohres in Umfangsrichtung bereits, eine mechanische Verbindung zwischen den Bandkanten in Umfangsrichtung lediglich an in Längsrichtung aufeinanderfolgenden Verbindungsstellen bereitzustellen, zwischen denen die Bandkanten des Folienröhrchens ohne mechanische, kraftschlüssige Festverbindung verbleiben. Dadurch bleibt das Folienröhrchen weitgehend lagestabil auf der Kabelseele als Bedeckung liegen. Ein Heruntergleiten oder Verrutschen der Folie von der Kabelseele ist somit bei der Kabelherstellung und auch beim späteren Kabeleinsatz weitgehend vermieden. Dadurch, daß die Bandkanten der Folie FO1, lediglich diskontinuierlich, das heißt an lokalen Einzelstellen mechanisch miteinander verbunden werden und nicht über die Gesamtlänge der Kabelseele hinweg, ist es ermöglicht, die Kabelseele KS besonders schnell mit der Folie FO1 in Längsrohrform zu umgeben und dauerhaft lagezufixieren. Weiterhin ist dadurch in besonders einfacher Weise eine Endlosfertigung des Nachrichtenkabels NK1 ermöglicht. Um einem Aufgehen des Folienrohres entgegenzuwirken, ist es also nicht mehr erforderlich, die folienbedeckte Kabelseele nachträglich außen mit einer zusätzlichen Haltewendel zu umwickeln, was einen Arbeitsgang einspart. Auch kann die derart folienumhüllte Kabelseele auf einer Vorratstrommel zur späteren Weiterverarbeitung zwischengelagert werden, wobei die Folie einwandfrei auf der Kabelseele verbleibt, d.h. unzulässige Ablöse- oder Verschiebevorgänge der Folie sind weitgehend vermieden. Gegenüber Kabelseelen, die mit Garnen, insbesondere metallischen Fäden zur elektromagnetischen Abschirmung besponnen werden, weist eine zum Längsrohr geformte und lediglich an aufeinanderfolgenden Stellen in Umfangsrichtung fixierte elektromagnetische Abschirmfolie eine höhere Konstanz seiner Geometrieform über die Kabellänge hinweg gesehen auf. Dies verbessert die elektromagnetische Abschirmwirkung, was insbesondere bei hochfrequenten Datenleitungen von Bedeutung ist. Weiterhin ist eine Folie weitaus dichter und damit insbesondere auch eine elektromagnetische Abschirmfolie elektromagnetisch "dichter" als ein Geflecht bzw. eine Bespinnung aus Einzelfäden mit frei bleibenden Maschenlücken.

Die mit der Folie FO1 bedeckte Kabelseele wird mit Hilfe einer Abzugsvorrichtung RA, insbesondere einem Raupenbandabzug in Abzugsrichtung AZ weiter transportiert und schließlich auf der feststehenden Vorratstrommel AT aufgetrommelt. Gegebenenfalls kann es zweckmäßig sein, die mit der Folienlage bedeckte Kabelseele im selben Arbeitsgang mit Hilfe eines Extruders entsprechend EX von Figur 1 zusätzlich mit einem ein- oder mehrschichtigen Außenmantel zu umgeben. Ein solcher Extruder EX ist in der Figur 1 zusätzlich strichpunktiert zwischen der Abzugsvorrichtung RA und der Aufwickeltrommel AT eingezeichnet.

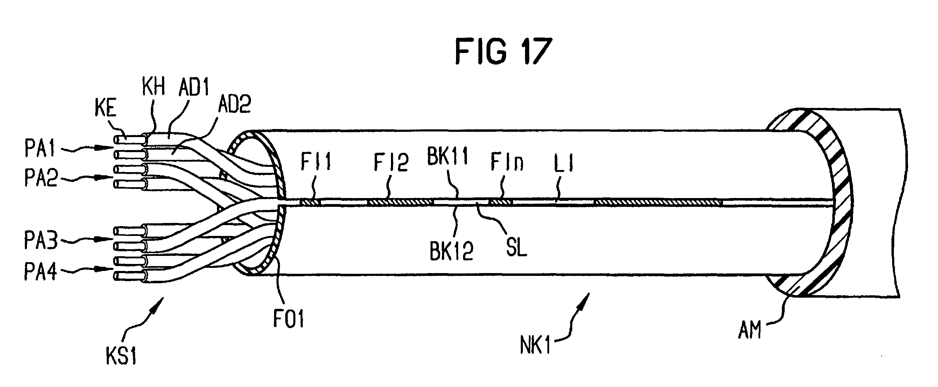

Figur 17 zeigt schematisch sowie vergrößert in perspektivischer Darstellung das Nachrichtenkabel NK1 von Figur 16. Die Kabelseele KS1 ist beispielhaft durch vier elektrische Aderpaare PA1 mit PA4 gebildet, die miteinander zu einem sogenannten "symmetrischen Sternvierer" verseilt sind. Das jeweilige elektrische Aderpaar wie zum Beispiel PA1 ist jeweils durch zwei elektrische Adern (Leiter) wie zum Beispiel AD1, AD2 gebildet. Die jeweilige Ader wie zum Beispiel AD1 weist im Zentrum einen elektrisch leitenden Kern KE, wie zum Beispiel einen metallischen Draht, insbesondere einen Kupferdraht, mit vorzugsweise etwa kreiszylinderförmiger Form auf. Dieser elektrisch leitende Kern KE ist außen ringsum mit einer elektrisch isolierenden Kunststoff- Umhüllung KH umgeben, die auf dem Kern KE in Form einer kreiszylinderförmigen Isoliermantels fest aufsitzt.

Auf diese Kabelseele KS1 ist die Folie FO1 in Form eines Längsschlitzrohres aufgebracht, d.h. das Folienrohr schließt die Kabelseele ringsum weitgehend ein und sitzt dabei auf ihr auf. Ihre Bandkanten BK11, BK12 stehen sich mit ihren Stirnseiten einander gegenüber, wobei der Längsspalt bzw. Längsschlitz LI zwischen ihnen als schmale Trennfuge liegt. Sie erstrecken sich im wesentlichen geradlinig sowie parallel zur Zentralachse der Kabelseele KS1. Die längsverlaufenden Bandkanten BK11, BK12 sind mit Hilfe der in Abständen aufeinanderfolgenden Fixierungen FI1 mit FIn miteinander mechanisch verbunden, d.h. aneinandergeheftet. Die jeweilige Fixierung wie zum Beispiel FI1 kann vorzugsweise durch eine Verklebung oder Schmelzverschweißung der beiden Bandkanten BK11, BK12 gebildet sein. Eine Fixierung der beiden aneinanderstoßenden Bandkanten BK11, BK12 kann insbesondere dadurch bewirkt werden, daß an der Fixierungsstelle die Folie angeschmolzen wird und die beiden Randzonen der Folie FO1 in Umfangsrichtung betrachtet aneinandergedrückt werden, wodurch sie aneinanderhaften. Besonders zweckmäßig kann es sein, zusätzlich ein Klebematerial oder Schmelzmaterial auf die jeweilige Fixierstelle zu geben, um die Materiallücke zwischen den beiden Bandkanten BK11, BK21 möglichst vollständig ausfüllen zu können. Dadurch ist die jeweilige Fixierung im Längsschlitz zwischen den beiden, einander gegenüberstehenden Stirnseiten der Bandkanten gebildet. Die Fixierungen FI1 mit FIn folgen in der Figur 17 in unregelmäßigen Abständen aufeinander. Sie weisen vorzugsweise einen Mindestabstand von 2 mm, insbesondere zwischen 5 und 200 mm, bevorzugt zwischen 10 und 100 mm voneinander auf. Die jeweilige Fixierung wie zum Beispiel FI1 weist vorzugsweise eine größere Ausdehnung in Längsrichtung der Kabelseele KS als in Umfangsrichtung auf. Insbesondere ist die Längsausdehnung der jeweiligen Fixierung zwischen 1 und 10 mal, bevorzugt zwischen 1,2 und 5 mal größer als in Umfangsrichtung. Für die jeweilige Fixierung ist vorzugsweise eine Längsausdehnung von höchstens 20 mm, insbesondere höchstens 10 mm, vorzugsweise zwischen 1 und 10 mm, bevorzugt zwischen 1 und 5 mm gewählt. Zwischen jeweils zwei benachbarten Fixierungen wie zum Beispiel FI1, FI2 bleiben die Bandkanten BK11, BK12 somit mechanisch unverbunden, das heißt dort können sich die beiden Bandkanten der Folie FO1 noch auseinanderbewegen. Aufgrund der verbleibenden Lücken bzw. Längsunterbrechungen zwischen den einzelnen Fixierungen FI1 mit FIn bleibt somit eine Ausweichmöglichkeit bzw. Verschiebung der beiden, dort unverbundenen Folienhälften voneinander weg erhalten. Bei etwaig auftretenden Beanspruchungen wie zum Beispiel Biege-, Torsions- sowie Zugbeanspruchungen während der Herstellung oder im Gebrauch des Nachrichtenkabels NK1 kann somit die derart mit Längsunterbrechungen fixierte Folie Ausgleichsbewegungen weitaus besser mitmachen als ein über die Kabellänge gesehen durchgehend längsverschweißtes Folienrohr, da sich ihre Bandkanten BK11, BK12 noch weitgehend frei auseinander bewegen lassen. Dies sorgt insbesondere auch für eine verbesserte Verbiegbar- und Tortierbarkeit des fertigen Nachrichtenkabels NK1.

Besonders zweckmäßig kann es sein, die Folie FO1 zu einem solchen Längsrohr zu formen, bei dem die Bandkanten BK11, BK12 Stoß an Stoß, d.h. möglichst bündig in Umfangsrichtung, aneinandergesetzt sind.

Gegebenenfalls kann es auch zweckmäßig sein, die Fixierungen FI1 mit FIn lediglich punktuell auszubilden, d.h. zwischen den Bandkanten BK11, BK12 jeweils lediglich eine punktförmige mechanische Verbindung, insbesondere Verschweißung oder Verklebung vorzusehen.

Auf der zum Längsrohr geformten Folie FO1 sitzt schließlich außen ein ein- oder mehrschichtiger Kabelaußenmantel AM und/oder eine Bewehrung fest auf. Der Außenmantel AM ist in der Figur 2 der Übersichtlichkeit halber lediglich ausschnittsweise in der rechten Bildhälfte dargestellt.

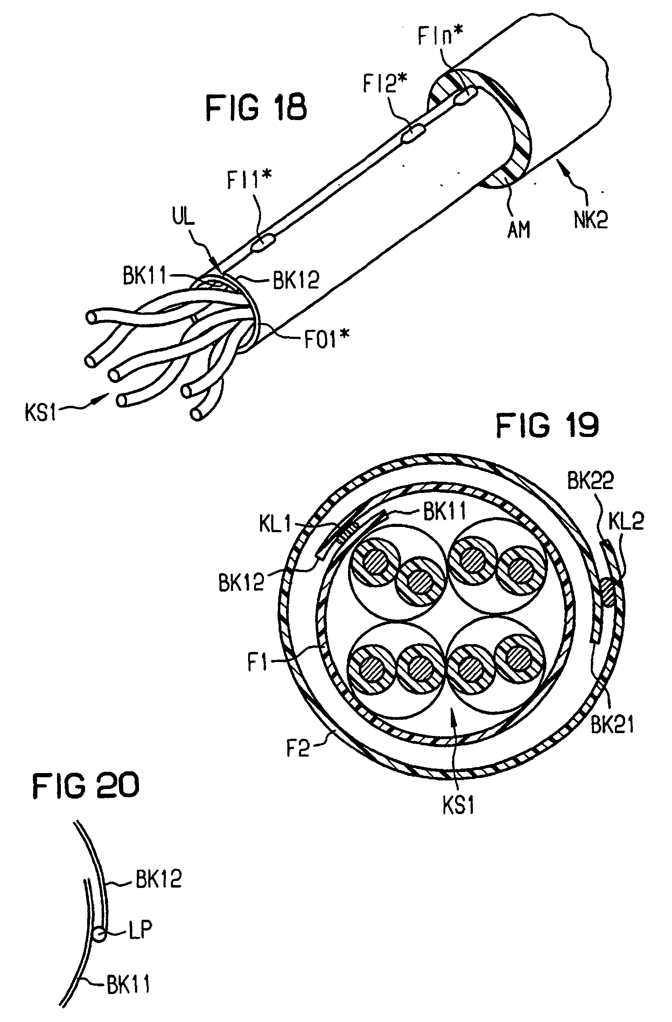

Figur 18 zeigt schematisch in perspektivischer Darstellung eine weitere Möglichkeit der Fixierung der Geometrieform einer Folie FO1*, die in Form eines Längsrohres die Kabelseele KS umgibt. Im Unterschied zur Figur 17 ist jetzt die Folie FO1* mit sich überlappenden Bandkanten BK11, BK12 um die Kabelseele KS zu einem Längsrohr herumgeformt. Die Überlappungszone UL der beiden Bandkanten BK11, BK12 erstreckt sich dabei ebenfalls vorzugsweise im wesentlichen geradlinig in Längsrichtung der Kabelseele KS1. Die beiden Folienränder bzw. Bandkanten BK11, BK12 liegen entlang diesem Überlappungsabschnitt UL übereinander. Die Folie FO1* ist vorzugsweise zu einem etwa kreiszylinderförmigen Längsrohr geformt. Die Fixierung dieser Geometrieform wird dadurch bewirkt, daß auf der Oberseite der Folie FO1* im Bereich deren sich überlappenden Teilhälften jeweils Fixierungen FI1* mit FIn* von außen her in Längsabständen voneinander aufgebracht sind. In der Figur 3 ist die jeweilige Fixierung wie zum Beispiel FI1* vorzugsweise im wesentlichen als etwa kreisförmiger Fleck, insbesondere punktuell ausgebildet. Die jeweilige Fixierung wie zum Beispiel FI1* ist im Bereich der Abbruchkante der oben aufliegenden Bandkante BK12 zur darunterliegenden Folienrandzone BK11 angebracht. Dazu kann es bereits ausreichend sein, dort im Übergangsbereich die beiden Folienränder anzuschmelzen, so daß sie miteinander verkleben, d.h. aneinandergeheftet sind. Weiterhin kann es gegebenenfalls zweckmäßig sein, den Übergangsbereich UL zwischen der oben aufliegenden Bandkante wie hier z.B. BK12 der Folie FO1* und der gegenüberliegenden Randzone wie z.B. BK11 zusätzlich mit einem Schmelz- oder Klebematerial von außen zu bedecken und dadurch die in Längsabständen aufeinanderfolgenden Fixierungen FI1* mit Fin* zu bewirken.

Genauso kann es natürlich auch zweckmäßig sein, die beiden Bandkanten der Folie FO1* von Figur 3 von innen her, das heißt im Bereich zwischen ihren übereinander liegenden Randzonen mechanisch zu fixieren, d.h. aneinanderzuheften. Dies kann beispielsweise dadurch bewerkstelligt werden, daß an lokalen Stellen, die mit Längsabstand aufeinanderfolgen, Klebemittel, insbesondere ein Schmelzkleber, auf eine Randzone der Folie FO1* aufgebracht wird und darüber die andere Bandkante geschlagen wird.

Dies veranschaulicht schematisch im Querschnitt die Figur 19. Dort ist eine erste, innere Folie wie z.B. F1 um die Kabelseele KS1 mit sich überlappenden Bandkanten BK11, BK12 herumgeschlagen. Die beiden Bandkanten BK11, BK12 sind durch eine Fixierung KL1, insbesondere Klebemittel miteinander verbunden, die zwischen der Außenseite der innenliegenden Bandkante BK11 und der Innenseite der darüberliegenden Bandkante BK12 liegt. Analog dazu ist außen um das durch die Folie F1 gebildete Längsrohr eine weitere, zweite Folie wie z.B. F2 zu einem Längsrohr herumgeformt. Deren Bandkanten BK21, BK22 sind analog zur ersten Folie F1 ebenfalls übereinandergeschlagen. Die Fixierung der übereinanderliegenden Bandkanten BK21, BK22 der Folie F2 wird ebenfalls von innen her durch eine Fixierung KL2 bewirkt, die im Zwischenraum zwischen den übereinanderliegenden Bandkanten BK21, BK22 liegt. Die Verteilung der Fixierungen für die Folien F1, F2 ist dabei vorzugsweise entsprechend den Figuren 16 mit 18 in Längsrichtung der Kabelseele vorgesehen, das heißt die Fixierungen KL1 der ersten Folie F1 folgen in Längsabständen aufeinander. Gleiches gilt für die Fixierungen KL2 der zweiten Folie F2.

Figur 20 zeigt schematisch im Detail eine weitere Möglichkeit, wie die sich überlappenden Bandkanten BK11, BK12 der Folie F1 bzw. F2 von Figur 19 miteinander mechanisch fixiert werden können. Im Querschnittsbild von Figur 20 ist am Bandkantenabbruch der oben aufliegenden Bandkante BK12 ein Material- Verbindungspunkt zur darunterliegenden Randzone der Bandkante BK11 gesetzt, d.h. es ist dort eine stoffschlüssige Verbindung mit annäherungsweise Punkt- oder Tröpfchenform vorgesehen. Eine solche Materialverbindung kann insbesondere mit Hilfe eines Laserschweißgerätes dadurch hergestellt werden, daß der stirnseitige Bereich der obenaufliegenden Bandkante angeschmolzen wird, ein Teil davon auf die andere, darunterliegende Bandkante BK11 tropft und dort haften bleibt. Vorzugsweise wird die obenauf liegende Bandkante BK12 lasergepunktet an die untenliegende Bandkante angeheftet. Insbesondere kann es bereits ausreichend sein, die Randzonen der Folie lediglich im Bereich der Abbruchkante der obenaufliegenden Bandkante BK12 aufzuschmelzen, so daß sich das Material der obenaufliegenden Bandkante BK12 mit dem Material der unten liegenden Bandkante BK11 vermengt. Dabei kann es zweckmäßig sein, die beiden Bandkanten BK11, BK12 solange aneinander zu drücken, bis deren Schmelzbad ausreichend erstarrt, d.h. ausreichend abgekühlt ist, und somit eine Feststoffverbindung der Bandkanten in Umfangsrichtung hergestellt ist. Zusätzlich oder unabhängig hiervon kann es auch vorteilhaft sein, an die jeweilige Fixierungsstelle, d.h. hier an der Nahtstelle zwischen der Abbruchkante der obenauf liegenden Bandkante BK12 und der tiefer liegenden Bandkante BK11, jeweils einen zusätzlichen, weichen oder gar flüssigen Füllmaterialtropfen zu geben, der beim Erkalten die beiden Bandkanten BK11, BK12 durch Stoffschluß aneinander bindet. Weiterhin kann es auch zweckmäßig sein, einen Klebemitteltropfen auf die Nahtstelle zwischen der obenauf liegenden Bandkante BK12 und der unten liegenden Bandkante BK11 zu setzen und somit eine punktuelle, stoffschlüssige Verbindung in Umfangsrichtung zwischen den beiden Folienrändern bereitzustellen.

Derart punktuell gefertigte Haftstellen, die die beiden Bandkanten BK11, BK12 in Umfangsrichtung aneinanderheften, sind dann über die Länge der Kabelseele gesehen analog zu den Fixierungen der Figuren 16 mit 19 mit vorgebbaren Längsabständen hintereinandergesetzt und bewirken somit den Zusammenhalt des Folienröhrchens.

Die Figuren 16 mit 18 beziehen sich zwar lediglich auf eine einzelne Folie bzw. die Figur 19 auf zwei Folien. Das erfindungsgemäße Heftprinzip zur Fixierung der vorgegebenen Geometrieform der jeweiligen Folie läßt sich jedoch auf beliebig viele, d.h. ein oder mehrere Folienlagen erweitern.

Zwar wurde in den Figuren 16 mit 19 jeweils eine elektrische Kabelseele mit einem Folienrohr umkleidet. Genauso lassen sich nach dem erfindungsgemäßen Prinzip jedoch auch beliebig andere, langgestreckte Kabelprodukte unterschiedlicher Gestalt, Dimensionierung und Konfiguration mit mindestens einem Folienrohr umhüllen, insbesondere bedecken. So kann beispielsweise als Kabelprodukt eine elektrische Ader, ein elektrisches Aderpaar, eine elektrische Bandleitung oder ein sonstiges elektrisches Nachrichten- Übertragungselement vorgesehen sein. Genauso kann die Folienumhüllung nach dem erfindungsgemäßen Verfahren auch bei Kabelelementen angewendet werden, die mindestens ein optischen Übertragungselement aufweisen. So kann ein derartiges Kabelelement beispielsweise durch einen Lichtwellenleiter, eine Lichtwellenleiter- Bündelader, ein Lichtwellenleiterbändchen, eine optische Kabelseele wie z.B. eine Kammerkabelseele oder eine Vielzahl miteinander verseilter Einzel-Lichtwellenleiter gebildet sein. Gegebenenfalls kann das Kabelelement auch durch eine Gruppe von mindestens einem optischen Übertragungs- sowie mindestens einem elektrischen Übertragungselement aufgebaut sein.

Mit dieser Art der Folienformung und Fixierung ist es möglich, die Kabelseele mit Geschwindigkeiten zwischen 2 und 300 m/sec, insbesondere zwischen 40 und 200 m/sec in Längsrichtung abzuziehen. Insgesamt betrachtet ist es also ermöglicht, besonders hohe Abzugsgeschwindigkeiten bei der Kabelherstellung zu erreichen.

## Patentansprüche

1. Verfahren zum Längsaufbringen mindestens einer Folie (F1) auf mindestens ein in Längsrichtung (AZ) durchlaufendes, langgestrecktes Kabelprodukt (KS), bei dem die Folie (F1) entlang einer zugeordneten Umformstrecke (TL1) separat vom durchlaufenden Kabelprodukt (KS) geführt und dabei rings um das Kabelprodukt (KS) zu einem Folien- Längsrohr (FR1) vorgebbarer Querschnittsform herumgeformt wird, und bei dem erst dann das so gebildete Folien- Längsrohr (FR1) mit dem durchlaufenden Kabelprodukt (KS) in Kontakt gebracht wird,
**dadurch gekennzeichnet,**
**daß** unmittelbar nach Beendigung der Folienformung rings um das mit einer oder mehreren rohrförmigen Folien (FR1, FR2) bedeckte Kabelprodukt (KS) mindestens ein Außenmantel (AM) mit Hilfe eines Extruders (EX) herumextrudiert wird und das mit einer oder mehreren Folien (F1, F2) umgebene Kabelprodukt (KS*) beim Hindurchführen durch den Extruder (EX) zumindest solange radial von außen abgestützt wird, bis der Außenmantel (AM) aufextrudiert und dadurch eine Lagefixierung der Folie oder der Folien bewirkt wird.

2. Verfahren nach Anspruch 1,
**dadurch gekennzeichnet,**
**daß** als Kabelprodukt mindestens ein elektrisches und/oder optisches Übertragungselement, insbesondere eine elektrische und/oder optische Kabelseele verwendet wird.

3. Verfahren nach einem der vorhergehenden Ansprüche,
**dadurch gekennzeichnet,**
**daß** mindestens zwei Folien (F1, F2) entlang aufeinanderfolgender Teillängen (TL1, TL2) des durchlaufenden Kabelprodukts (KS) separat voneinander zu Folien- Längsrohren (FR1, FR2) umgeformt und zeitlich nacheinander auf das Kabelprodukt (KS) längsaufgebracht werden.

4. Verfahren nach einem der Ansprüche 1 oder 2,
**dadurch gekennzeichnet,**
**daß** mindestens zwei Folien (F1, F2) entlang etwa derselben Umformstrecke (TL1) separat übereinander zu Folien- Längsrohren (FR1, FR2) um das Kabelprodukt (KS) herumgeformt werden,
und **daß** diese übereinander geschachtelten Folien- Längsrohre (FR1, FR2) etwa beim selben Längsort gleichzeitig auf das Kabelprodukt (KS) längsaufgebracht werden.

5. Verfahren nach einem der vorhergehenden Ansprüche,
**dadurch gekennzeichnet,**
**daß** die jeweilige Folie (F1) zu einem etwa kreiszylinderförmigen Rohr (FR1) um das Kabelprodukt (KS) herumgeformt wird.

6. Verfahren nach einem der vorhergehenden Ansprüche,
**dadurch gekennzeichnet,**
**daß** die Rohrformung für die jeweilige Folie (F1) kontinuierlich entlang der zugeordneten Umformstrecke (TL1) durchgeführt wird.

7. Verfahren nach einem der vorhergehenden Ansprüche,
**dadurch gekennzeichnet,**
**daß** als Folie (F1) eine elektromagnetische und/oder elektrostatische Abschirmfolie gewählt wird.

8. Verfahren nach einem der vorhergehenden Ansprüche,
**dadurch gekennzeichnet,**
**daß** die jeweilige Folie (F1) zu einem Längsschlitzrohr geformt wird.

9. Verfahren nach einem der Ansprüche 1 mit 7,
**dadurch gekennzeichnet,**
**daß** die jeweilige Folie (F1) mit sich überlappenden Bandkanten zu einem längsverlaufenden Rohr geformt wird.

10. Vorrichtung zum Längsaufbringen mindestens einer Folie (F1) auf mindestens ein in Längsrichtung (AZ) durchlaufendes Kabelprodukt (KS), bei der entlang einer der Folie (F1) zugeordneten Umformstrecke (TL1) Umformmittel (S11 - S2n) vorgesehen sind, die die Folie (F1) separat vom durchlaufenden Kabelprodukt (KS) rings um dieses zu einem Folien- Längsrohr (FR1) vorgebbarer Querschnittsform herumformen und dann erst dieses gebildete Folien- Formrohr (FR1) in Kontakt mit dem durchlaufenden Kabelprodukt (KS) bringen,
**dadurch gekennzeichnet,**
**daß** das jeweilige Umformmittel (S11 - S2n) separate Durchgangsöffnungen (KD, SL1) für das Kabelprodukt (KS) sowie die Folie (F1) aufweist.

11. Vorrichtung nach Anspruch 10,
**dadurch gekennzeichnet,**
**daß** die Umformmittel durch mehrere Führungsscheiben (S11 - S2n) gebildet sind, die in Längsrichtung (AZ) mit Abstand aufeinanderfolgen.

12. Verfahren zum Längsaufbringen mindestens einer Folie (FO1) auf ein in Längsrichtung (AZ) durchlaufendes Kabelprodukt (KS), bei dem die Folie (FO1) zu einem Folien- Längsrohr um das Kabelprodukt (KS) herumgeformt und auf dieses mit längsverlaufenden Bandkanten (BK11, BK12) aufgebracht wird,
**dadurch gekennzeichnet,**
**daß** die beiden Bandkanten (BK11, BK12) des Folien- Längsrohres lediglich mit Hilfe von im Längsabstand aufeinanderfolgenden Fixierungen (FI1 mit FIn) aneinander geheftet werden, während sie zwischen diesen Fixierungen (FI1 mit FIn) unverbunden bleiben.

13. Verfahren nach Anspruch 12,
**dadurch gekennzeichnet,**
**daß** die Fixierungen (FI1 mit FIn) durch Verkleben, Schmelzschweißen oder Laserschweißen bewirkt werden.

14. Verfahren nach einem der Ansprüche 12 oder 13,
**dadurch gekennzeichnet,**
**daß** die Bandkanten (BK11, BK12) der jeweiligen Folie (FO1) durch Fixierungen (FI1 mit FIn) zusammengehalten werden, die mit etwa demselben Längsabstand in Längsrichtung (AZ) aufeinanderfolgen.

15. Verfahren nach einem der Ansprüche 12 oder 13,
**dadurch gekennzeichnet,**
**daß** die Bandkanten (BK11, BK12) der jeweiligen Folie (FO1) mit Fixierungen (FI1 mit FIn) zusammengehalten werden, die in unregelmäßigen Längsabständen in Längsrichtung (AZ) aufeinanderfolgen.

16. Nachrichtenkabel (NK1) mit mindestens einem langgestreckten Kabelprodukt (KS1), auf das mindestens eine Folie (FO1) aufgebracht ist, bei dem die Folie (FO1) zu einem Längsrohr mit längsverlaufenden Bandkanten (BK11, BK12) um das Kabelprodukt (KS1) herumgeformt ist,
**dadurch gekennzeichnet,**
**daß** die Bandkanten (BK11, BK12) der Folie (FO1) lediglich mit Hilfe von im Längsabstand aufeinanderfolgenden Fixierungen (FI1 mit FIn) aneinander geheftet sind, während sie zwischen diesen Fixierungen (FI1 mit FIn) unverbunden sind.

17. Vorrichtung zum Aufbringen mindestens einer Folie (FO1) auf ein in Abzugsrichtung (AZ) durchlaufendes Kabelprodukt (KS1), bei dem Umformmittel (FS1 mit FS3) vorgesehen sind, mit denen die Folie (FO1) zu einem Längsrohr mit längsverlaufenden Bandkanten (BK11, BK12) um das Kabelprodukt (KS) herumformbar ist,
**dadurch gekennzeichnet,**
**daß** Fixiermittel (LA) nachgeordnet sind, mit denen die Bandkanten (BK11, BK12) der Folie (FO1) lediglich an mit Längsabstand aufeinanderfolgenden Fixierungen (FI1 mit FIn) aneinander heftbar sind, während sie zwischen den Fixierungen (FI1 mit FIn) unverbunden bleiben.

18. Vorrichtung nach Anspruch 17,
**dadurch gekennzeichnet,**
**daß** als Fixiermittel (LA) eine Klebeeinrichtung, eine Schmelz-Schweißeinrichtung oder ein Laserschweißgerät verwendet ist.

## Claims

1. Process for longitudinally applying at least one foil (F1) to at least one elongated cable product (KS) running through in the longitudinal direction (AZ), in which the foil (F1) is led along an assigned forming path (TL1) separately from the running-through cable product (KS) and is thereby formed annularly around the cable product (KS) to form a longitudinal tube of foil (FR1) of predeterminable cross-sectional shape, and in which only then is the longitudinal tube of foil (FR1) formed in this way brought into contact with the running-through cable product (KS), **characterized in that**, immediately after ending the forming of the foil annularly around the cable product (KS) covered with one or more tubular foils (FR1, FR2), at least one outer sheath (AM) is extruded around with the aid of an extruder (EX) and the cable product (KS*) surrounded by one or more foils (F1, F2) is supported radially from outside as it is led through the extruder (EX), at least until the outer sheath (AM) has been extruded on and, as a result, positional fixing of the foil or the foils is effected.

2. Process according to Claim 1, **characterized in that** at least one electrical and/or optical transmission element, in particular an electrical and/or optical cable core, is used as the cable product.

3. Process according to one of the preceding claims, **characterized in that** at least two foils (F1, F2) are formed separately from each other along successive partial lengths (TL1, TL2) of the running-through cable product (KS) to form longitudinal tubes of foil (FR1, FR2) and are longitudinally applied to the cable product (KS) one after the other at successive times.

4. Process according to either of Claims 1 and 2, **characterized in that** at least two foils (F1, F2) are formed along approximately the same forming path (TL1) separately one over the other to form longitudinal tubes of foil (FR1, FR2) around the cable product (KS), and **in that** these longitudinal tubes of foil (FR1, FR2) interleaved one over the other are longitudinally applied approximately at the same longitudinal location simultaneously to the cable product (KS).

5. Process according to one of the preceding claims, **characterized in that** the respective foil (F1) is formed around the cable product (KS) to form an approximately circular-cylindrical tube (FR1).

6. Process according to one of the preceding claims, **characterized in that** the tube forming for the respective foil (F1) is carried out continuously along the assigned forming path (TL1).

7. Process according to one of the preceding claims, **characterized in that** an electromagnetic and/or electrostatic shielding foil is chosen as the foil (F1).

8. Process according to one of the preceding claims, **characterized in that** the respective foil (F1) is formed into a longitudinally slit tube.

9. Process according to one of Claims 1 to 7, **characterized in that** the respective foil (F1) is formed with overlapping strip edges to form a longitudinally running tube.

10. Device for longitudinally applying at least one foil (F1) to at least one cable product (KS) running through in the longitudinal direction (AZ), in which forming means (S11 - S2n) are provided along a forming path (TL1) assigned to the foil (F1), which forming means form the foil (F1) separately from the running-through cable product (KS) annularly around the latter to form a longitudinal tube of foil (FR1) of predeterminable cross-sectional shape and only then bring this formed longitudinal tube of foil (FR1) into contact with the running-through cable product (KS), **characterized in that** the respective forming means (S11 - S2n) has separate through-openings (KD, SL1) for the cable product (KS) and the foil (F1).

11. Device according to Claim 10, **characterized in that** the forming means are formed by a plurality of guiding discs (S11 - S2n), which follow one another at intervals in the longitudinal direction (AZ).

12. Method for longitudinally applying at least one foil (FO1) to a cable product (KS) running through in the longitudinal direction (AZ), in which the foil is formed around the cable product (KS) to form a longitudinal tube of foil and is applied to the latter with longitudinally running strip edges (BK11, BK12), **characterized in that** the two strip edges (BK11, BK12) of the longitudinal tube of foil are tacked onto one another merely with the aid of fixings (FI1 to FIn) following one another at longitudinal intervals, while they remain unconnected between these fixings (FI1 to FIn).

13. Process according to Claim 12, **characterized in that** the fixings (FI1 to FIn) are effected by adhesive bonding, fusion welding or laser welding.

14. Process according to either of Claims 12 and 13, **characterized in that** the strip edges (BK11, BK12) of the respective foil (FO1) are held together by fixings (FI1 to FIn), which follow one another at approximately the same longitudinal intervals in the longitudinal direction (AZ).

15. Process according to either of Claims 12 and 13, **characterized in that** the strip edges (BK11, BK12) of the respective foil (FO1) are held together by fixings (FI1 to FIn), which follow one another at irregular longitudinal intervals in the longitudinal direction (AZ).

16. Communication cable (NK1) with at least one elongated cable product (KS1), to which at least one foil (FO1) is applied, in which the foil (FO1) is formed around the cable product (KS1) to form a longitudinal tube with longitudinally running strip edges (BK11, BK12), **characterized in that** the strip edges (BK11, BK12) of the foil (FO1) are tacked onto one another merely with the aid of fixings (FI1 to FIn) following one another at longitudinal intervals, while they are unconnected between these fixings (FI1 to FIn).

17. Device for applying at least one foil (FO1) to a cable product (KS1) running through in the drawing-off direction (AZ), in which forming means (FS1 to FS3) are provided, by which forming means the foil (FO1) can be formed around the cable product (KS) to form a longitudinal tube with longitudinally running strip edges (BK11, BK12), **characterized in that** arranged downstream are fixing means (LA) with which the strip edges (BK11, BK12) of the foil (FO1) can be tacked onto one another merely at fixings (FI1 to FIn) following one another at longitudinal intervals, while they remain unconnected between the fixings (FI1 to FIn).

18. Device according to Claim 17, **characterized in that** an adhesive-bonding means, a fusion-welding means or a laser-welding appliance is used as the fixing means (LA).

## Revendications

1. Procédé de pose longitudinale d'au moins une feuille (F1) sur au moins un produit (KS) de câble défilant dans la direction (AZ) longitudinale et s'étendant en longueur, dans lequel on guide la feuille (F1) le long d'une section (TL1) associée de conformation séparément du produit (KS) de câble qui défile et on la conforme ainsi autour du produit (KS) de câble en un tube (FR1) longitudinal en feuille de forme de section transversale pouvant être prescrite et dans lequel ce n'est qu'alors que l'on met le tube (FR1) longitudinal en feuille ainsi formé en contact avec le produit (KS) de câble qui défile,
**caractérisé**
**en ce que** juste après la fin de la conformation de la feuille autour du produit (KS) de câble recouvert d'une ou de plusieurs feuilles (FR1, FR2) tubulaires, on extrude autour une enveloppe (AM) extérieure à l'aide d'une extrudeuse (EX) et l'on soutient radialement de l'extérieur le produit (KS*) de câble entouré d'une ou de plusieurs feuilles (F1, F2) lorsqu'il passe dans l'extrudeuse (EX) au moins jusqu'à ce que l'enveloppe (AM) extérieure soit appliquée par extrusion et on provoque ainsi une immobilisation en position de la feuille ou des feuilles.

2. Procédé suivant la revendication 1,
**caractérisé**
**en ce que** l'on utilise comme produit de câble au moins un élément électrique et/ou optique de transmission, notamment une âme de câble électrique et/ou optique.

3. Procédé suivant l'une des revendications précédentes,
**caractérisé**
**en ce que** l'on conforme au moins deux feuilles (F1, F2) le long de tronçons (TL1, TL2) successifs du produit (KS) de câble qui défile en tubes (FR1, FR2) longitudinaux en feuille et on les pose longitudinalement l'un après l'autre dans le temps sur le produit (KS) de câble.

4. Procédé suivant l'une des revendications 1 ou 2,
**caractérisé**
**en ce que** l'on conforme au moins deux feuilles (F1, F2) de long d'à peu près la même section (TL1) de conformation séparément de manière superposée en des tubes (FR1, FR2) longitudinaux en feuille autour du produit (KS) de câble et en ce que l'on pose longitudinalement ces tronçons (FR1, FR2) longitudinaux en feuille emboîtés l'un sur l'autre à peu près au même emplacement en longueur, simultanément sur le produit (KS) de câble.

5. Procédé suivant l'une des revendications précédentes,
**caractérisé**
**en ce que** l'on conforme la feuille (F1) respective autour du produit (KS) de câble en un tube (FR1) ayant à peu près la forme d'un cylindre de section circulaire.

6. Procédé suivant l'une des revendications précédentes,
**caractérisé**
**en ce que** l'on effectue la conformation en tube de la feuille (F1) respective d'une manière continue le long de la section (TL1) associée de conformation.

7. Procédé suivant l'une des revendications précédentes,
**caractérisé**
**en ce que** l'on choisit comme feuille (F1) une feuille de blindage électromagnétique et/ou électrostatique.

8. Procédé suivant l'une des revendications précédentes,
**caractérisé**
**en ce que** l'on conforme la feuille (F1) respective en un tube fendu longitudinalement.

9. Procédé suivant l'une des revendications 1 à 7,
**caractérisé**
**en ce que** l'on conforme la feuille (F1) respective en un tube s'étendant longitudinalement et ayant des bords qui se recouvrent.

10. Installation de pose longitudinale d'au moins une feuille (F1) sur au moins un produit (KS) de câble défilant dans la direction (AZ) longitudinale, dans laquelle il est prévu le long d'une section (TL1) de conformation associée à la feuille (F1) des moyens (S11 à S2n) de conformation qui conforment la feuille (F1) séparément du produit (KS) de câble, qui défile autour de celui-ci en un tube (FR1) longitudinal en feuille de forme de section transversale qui peut être prescrite et ensuite seulement on met ce tube (FR1) conformé en feuille en contact avec le produit (KS) de câble qui défile,
**caractérisée**
**en ce que** le moyen (S11 à S2n) respectif de conformation a des ouvertures (KD, SL1) séparées de sortie pour le produit (KS) de câble ainsi que pour la feuille (F1).

11. Installation suivant la revendication 10,
**caractérisée**
**en ce que** les moyens de conformation sont formés par plusieurs disques (S11 à S2n) de guidage qui se succèdent à distance dans la direction (AZ) longitudinale.

12. Procédé de pose longitudinale d'au moins une feuille (FO1) sur un produit (KS) de câble défilant dans la direction (AZ) longitudinale, dans lequel on conforme la feuille (FO1) en un tube longitudinal en feuille autour du produit (KS) de câble et on la pose sur celui-ci alors que ses bords (BK11, BK12) s'étendent longitudinalement,
**caractérisé**
**en ce que** l'on coud l'un à l'autre les deux bords (BK1, BK12) du tube longitudinale en feuille simplement à l'aide de fixations (FI1 à FIn) se succédant à distance longitudinalement, tandis qu'ils restent non liés entre ces fixations (FI1 à FIn).

13. Procédé suivant la revendication 12,
**caractérisé**
**en ce que** l'on réalise les fixations (FI1 à FIn) par collage, par soudage par fusion ou par soudage laser.

14. Procédé suivant l'une des revendications 12 ou 13,
**caractérisé**
**en ce que** l'on maintient ensemble les bords (BK11, BK12) de la feuille (FO1) respective par des fixations (FI1 à FIn) qui se succèdent à peu près au même intervalle en longueur dans la direction (AZ) longitudinale.

15. Procédé suivant l'une des revendications 12 ou 13,
**caractérisé**
**en ce que** l'on maintient ensemble les bords (BK11, BK12) de la feuille (FO1) respective par des fixations (FI1 à FIn) qui se succèdent à des intervalles en longueur irréguliers dans la direction (AZ) longitudinale.

16. Câble (NK1) de télécommunication ayant au moins un produit (KS1) de câble s'étendant en longueur sur lequel est posée au moins une feuille (FO1), dans lequel la feuille (FO1) peut être conformé autour du produit (KS) de câble en un tube longitudinal ayant des bords (BK11, BK12) s'étendant longitudinalement,
**caractérisé**
**en ce que** les bords (BK11, BK12) de la feuille (FO1) sont cousus l'un à l'autre simplement à l'aide de fixations (FI1 à FIn) se succédant à un intervalle en longueur, tandis qu'ils ne sont pas liés entre ces fixations (FI1 à FIn).

17. Installation de pose d'au moins une feuille (FO1) sur un produit (KS1) de câble défilant dans une direction (AZ) de tirage, dans laquelle il est prévu des moyens (FS1 à FS3) de conformation par lesquels la feuille (FO1) peut être conformée autour du produit (KS) de câble en un tube longitudinal ayant des bords (BK11, BK12) s'étendant longitudinalement,
**caractérisée**
**en ce qu'**il est monté en aval des moyens (LA) d'immobilisation par lesquels les bords (BK11, BK12) de la feuille (FO1) peuvent être simplement cousus l'un à l'autre par des fixations (FI1 à FIn) se succédant à intervalles en longueur, tandis qu'ils restent non reliés entre les fixations (FI1 à FIn).

18. Installation suivant la revendication 17,
**caractérisée en ce qu'**il est utilisé comme moyen (LA) de fixation un dispositif de collage, un dispositif de soudage par fusion ou un appareil de soudage par laser.
